Europäisches Patentamt

European Patent Office

Office européen des brevets

(19)

(11) EP 0 859 172 B1

(12) EUROPÄISCHE PATENTSCHRIFT

(45) Veröffentlichungstag und Bekanntmachung des Hinweises auf die Patenterteilung:
04.08.1999  Patentblatt 1999/31

(51) Int Cl.⁶: **F16H 61/14**

(21) Anmeldenummer: 98102154.6

(22) Anmeldetag: 07.02.1998

(54) **Verfahren zur Steuerung und Regelung einer Wandlerkupplung bei einem Getriebeschaltvorgang**

Control method of a torque converter lockup clutch at a transmission shift

Méthode de commande d'un embrayage de pontage de convertisseur de couple pendant un changement de vitesse de transmission

(84) Benannte Vertragsstaaten:
DE FR GB

(30) Priorität: 14.02.1997  DE 19705694

(43) Veröffentlichungstag der Anmeldung:
19.08.1998  Patentblatt 1998/34

(73) Patentinhaber: ZF FRIEDRICHSHAFEN Aktiengesellschaft
88038 Friedrichshafen (DE)

(72) Erfinder:
• **Zeller, Heinrich**
  **88048 Friedrichshafen (DE)**
• **Jauch, Friedemann, Dr.**
  **88074 Meckenbeuren (DE)**

(56) Entgegenhaltungen:
EP-A- 0 310 117            EP-A- 0 677 685
US-A- 5 480 363

• **ATZ AUTOMOBILTECHNISCHE ZEITSCHRIFT, Bd. 96, Nr. 11, 1994, STUTTGART, DE, Seiten 690-697, XP000478695**

**Beschreibung**

Die Erfindung betrifft ein Verfahren zur Steuerung und Regelung eines Schaltvorganges einer Wandlerkupplung, insbesondere einer geregelten Wandlerüberbrückungskupplung, mit einem Sollschlupf, wobei die Wandlerkupplung eine Regelstrecke darstellt, welche in einem Regelkreis, der eine Führungsgröße und eine Regelgröße aufweist, einem Regler nachgeschaltet ist.

Aus der Praxis sind für Kraftfahrzeuge mit Automatgetriebe Wandlerkupplungen und geregelte Wandlerüberbrückungskupplungen bekannt, die im geöffneten bzw. deaktivierten und einem aktivierten Zustand betrieben werden können, wobei der aktivierte Zustand sowohl den geregelt schlupfenden als auch den geschlossenen Betriebszustand umfaßt.

Eine derartige Wandlerüberbrückungskupplung ist beispielsweise in der ATZ Automobiltechnische Zeitschrift 96 (1994) 11 beschrieben. Bei dieser bekannten Wandlerüberbrückungskupplung wird der Wandlerschlupf als Regelgröße durch Subtraktion der wichtigsten Eingangsgrößen, nämlich Motordrehzahl und Turbinendrehzahl, berechnet. Die Führungsgröße ist der Sollschlupf der Wandlerüberbrückungskupplung, welche in einem Kennfeld im elektronischen Getriebesteuergerät (EGS) vorgegeben ist. Durch Vergleich von Soll- und Ist-Schlupf ergibt sich eine Regelabweichung, welche mit einem Regler ausgeregelt wird.

Als Stellglied für die Druckansteuerung dieser Wandlerüberbrückungskupplung dient ein elektrischer Drucksteller (EDS), der vom elektronischen Getriebesteuergerät (EGS) über eine stromgeregelte Endstufe angesteuert wird. Der EDS wandelt entsprechend seiner Kennlinie den vorgegebenen Steuerstrom in einen proportionalen Hydraulikdruck um. Durch diesen EDS-Druck werden z. B. bei einem Zwei-Leitungswandler mit zwei Steuerventilen sowohl der Wandlerdruck, der auf die Rückseite des Wandlerkupplungskolbens wirkt, als auch der Wandlerkupplungsdruck, der den Wandlerkupplungskolben schließt, gesteuert.

Während einer Schaltung mit aktivierter WK bleibt diese bekannte Wandlerkupplung stets im geregelten Zustand, um eine Hochdrehen des Motors zu vermeiden.

Problematisch ist jedoch die Regelung mit geringem Sollschlupf am Ende eines Schaltvorganges, da hier aufgrund der Reaktionszeiten z. B. von Stellgliedern, Hydraulik und Elektronik die Pumpendrehzahl derart abfällt, daß eine vorgegebene Drehzahldifferenz nicht mehr einhaltbar ist. Erst nach Ende der Reaktionszeit bewirkt der Regler, daß die Pumpendrehzahl wieder soweit ansteigt, daß sich der vorgegebene Schlupf einstellt. Dieses Problem tritt insbesondere bei kurzen Schaltungen mit hohen Drehzahlgradienten auf.

Aufgrund der Langsamkeit des Regelkreises bzw. der Regelungseinrichtungen kann die Drehzahldifferenz gegen Null gehen. Der Fahrer eines Kraftfahrzeuges nimmt diesen Zustand als ein störendes Brummen wahr.

Zur Verbesserung des Schaltkomforts wird daher die Führungsgröße Sollschlupf während der Schaltung um einen konstanten Betrag vergrößert und, je nach Zug-Hochschaltung oder Schub-Rückschaltung, spezielle Parametersätze für den Regler verwendet. Jedoch ist hierfür nachteilhafterweise ein aufwendiges und unübersichtliches Steuerungs- und Regelungsverfahren mit einer hohen Anzahl an abstimmbaren Parametersätzen für den Regler erforderlich.

Es ist daher Aufgabe der vorliegenden Erfindung, ein Verfahren bereitzustellen, mit dem die Steuerung und Regelung während eines Schaltvorganges bei einer Wandlerkupplung eines Automatgetriebes auf einfache und übersichtliche Art und Weise mit einer möglichst geringen Anzahl an Regler-Parametern durchführbar ist, wobei gleichzeitig ein hoher Fahrkomfort gewährleistet ist.

Diese Aufgabe wird durch ein Verfahren gemäß den im kennzeichnenden Teil des Anspruches 1 aufgeführten Verfahrensschritten gelöst.

Das erfindungsgemäße Verfahren bietet den Vorteil, daß durch die Variierung des Sollschlupfes während des Schaltvorganges nur ein einziger Reglerparametersatz benötigt wird, da der Regler auf sein schnellstes Verhalten eingestellt werden kann und nicht variiert werden muß.

Durch die erfindungsgemäße Erhöhung und Reduktion des Sollschlupfes wird der Schaltvorgang steuerungs- und regelungstechnisch nicht nur einfacher gestaltet, sondern für einen Fahrzeuginsassen auch kaum spürbar, wodurch der angestrebte hohe Fahrkomfort erzielt wird.

Des weiteren kann bei einer entsprechenden Gestaltung der Sollschlupf-Erhöhung und Sollschlupf-Reduktion die Schaltdauer ab dem Schaltbefehl verlängert werden.

Weitere Vorteile der Erfindung ergeben sich aus den Unteransprüchen und der nachfolgenden, auf die prinzipmäßige Zeichnung bezugnehmenden Beschreibung der Erfindung.
Es zeigt:

Fig. 1     ein Flußdiagramm eines Verfahrens zur Steuerung und Regelung eines Schaltvorganges einer geregelten Wandlerkupplung;

Fig. 2     ein Flußdiagramm der Verfahrensschritte des Prüfmodules zur Prüfung, ob ein vorgegebenes Startkriterium zur Sollschlupf-Erhöhung erfüllt ist, nach Fig. 1;

Fig. 3     ein Flußdiagramm der Verfahrensschritte eines weiteren Prüfmodules zur Prüfung, ob ein Startkriterium zur Soll schlupf-Erhöhung erfüllt ist, nach Fig. 1;

Fig. 4 ein Flußdiagramm der Verfahrensschritte eines weiteren Prüfmodules zur Prüfung, ob ein Startkriterium zur Sollschlupf-Erhöhung erfüllt ist, nach Fig. 1;

Fig. 5 ein Flußdiagramm der Verfahrensschritte des Verarbeitungsmoduls zur Sollschlupf-Erhöhung nach Fig. 1;

Fig. 6 ein Flußdiagramm der Verfahrensschritte des Prüfmoduls zur Prüfung, ob ein Startkriterium zur Sollschlupf-Reduktion erfüllt ist, nach Fig. 1;

Fig. 7 ein Flußdiagramm der Verfahrensschritte eines weiteren Prüfmoduls zur Prüfung, ob ein Startkriterium zur Sollschlupf-Reduktion erfüllt ist, nach Fig. 1;

Fig. 8 ein Flußdiagramm der Verfahrensschritte eines weiteren Prüfmoduls zur Prüfung, ob ein Startkriterium zur Sollschlupf-Reduktion erfüllt ist, nach Fig. 1;

Fig. 9 ein Flußdiagramm der Verfahrensschritte des Verarbeitungsmoduls zur Sollschlupf-Reduktion, nach Fig. 1;

Fig. 10 ein Diagramm mit dem Verlauf des Sollschlupfes über der Zeit bei einer Sollschlupf-Reduktion und

Fig. 11 ein Diagramm mit dem Verlauf des Sollschlupfes über der Zeit bei einer Sollschlupf-Erhöhung.

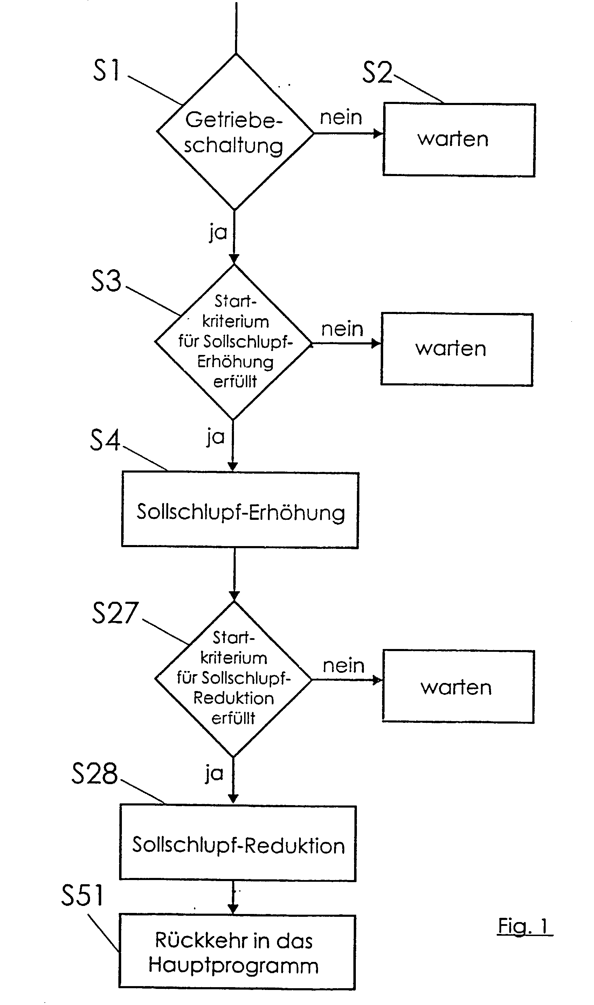

Bezug nehmend auf die Fig. 1 bis 11 ist ein Verfahren zur Steuerung und Regelung während eines Schaltvorganges bei einer geregelten Wandlerkupplung mit einem Sollschlupf dargestellt. Die Wandlerkupplung stellt dabei eine Regelstrecke dar, welche auf bekannte Art in einem Regelkreis, der eine Führungsgröße und eine Regelgröße aufweist, einem Regler nachgeschaltet ist.

Wie in Fig. 1 ersichtlich ist, wird in einer ersten Unterscheidungsfunktion S1 zunächst geprüft, ob ein Schaltbefehl zu einer Getriebeschaltung vorliegt. Ist dies nicht der Fall, wird eine Warteschleife S2 gestartet. Wenn jedoch in der ersten Unterscheidungsfunktion S1 ein Befehl zur Getriebeschaltung erkannt wird, wird eine weitere Unterscheidungsfunktion S3 gestartet, in welcher geprüft wird, ob ein vorgegebenes Startkriterium für ein nachfolgendes Verarbeitungsmodul S4 zur Sollschlupf-Erhöhung erfüllt ist.

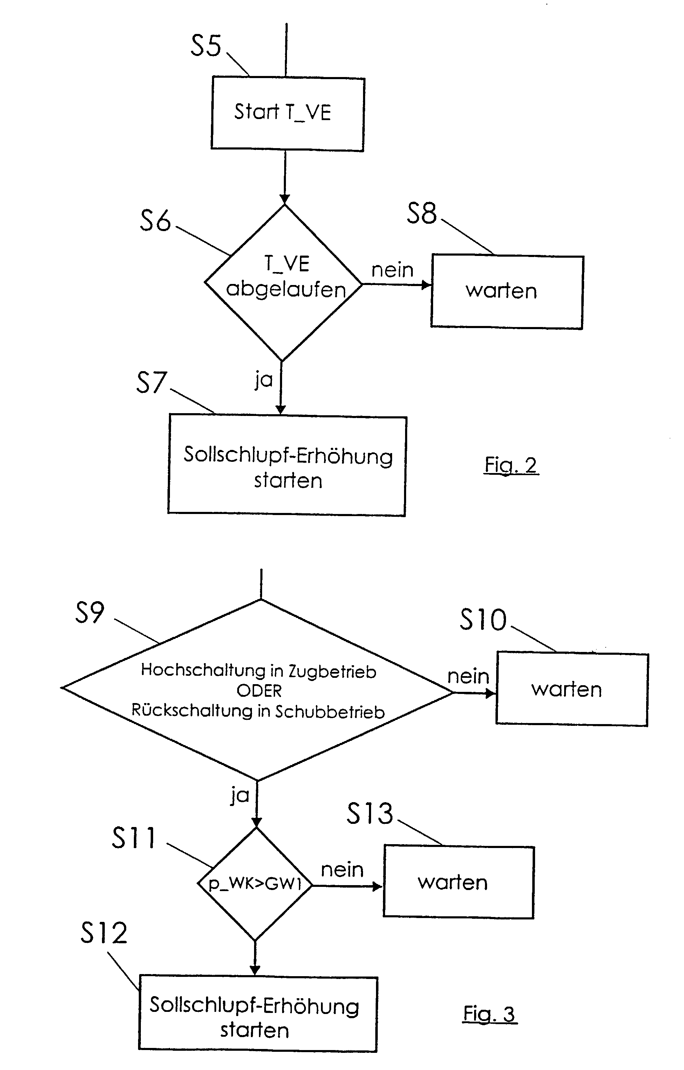

Das Prüfmodul S3 kann unterschiedlich aufgebaut sein, wie dies die in den Fig. 2 , 3 und 4 schematisch dargestellten Verfahrensschritte für ein derartiges Prüfungsmodul S3 zeigen.

Bezug nehmend auf Fig. 2 ist das Prüfmodul S3 derart aufgebaut, daß zunächst in einer Verarbeitungsfunktion S5 eine vordefinierte Verzögerungszeit zur Sollschlupf-Erhöhung T_VE mit Erkennen des Schaltbefehles gestartet wird. In einer nachfolgenden Unterscheidungsfunktion S6 wird geprüft, ob die Verzögerungszeit zur Sollschlupf-Erhöhung T_VE abgelaufen ist. Nur wenn diese Bedingung erfüllt ist, wird eine Verarbeitungsfunktion S7 zum Starten des Verarbeitungsmodules S4 zur Sollschlupf-Erhöhung aktiviert, anderenfalls wird eine Warteschleife S8 gestartet.

Alternativ hierzu kann das Prüfmodul S3 zur Prüfung, ob ein Startkriterium zur Sollschlupf-Erhöhung erfüllt ist, auch gemäß den Verfahrensschritten nach Fig. 3 aufgebaut sein. Bei dieser Ausführung wird in einer ersten Unterscheidungsfunktion S9 geprüft, ob ein Signal "Hochschaltung in Zugbetrieb" oder ein Signal "Rückschaltung in Schubbetrieb" vorliegt. Wenn das Abfrageergebnis dieser Unterscheidungsfunktion negativ ist, wird eine Warteschleife S10 aktiviert. Liegt jedoch ein Signal "Hochschaltung in Zugbetrieb" oder "Rückschaltung in Schubbetrieb" vor, wird eine weitere Unterscheidungsfunktion S11 gestartet, in der geprüft wird, ob ein Wandlerkupplungsdruck p_WK größer als ein erster Grenzwert GW1 ist. Wenn dies der Fall ist, wird eine Verarbeitungsfunktion S12 zum Starten des Verarbeitungsmodules S4 zur Sollschlupf-Erhöhung aktiviert, anderenfalls wird wieder eine Warteschleife S13 gestartet.

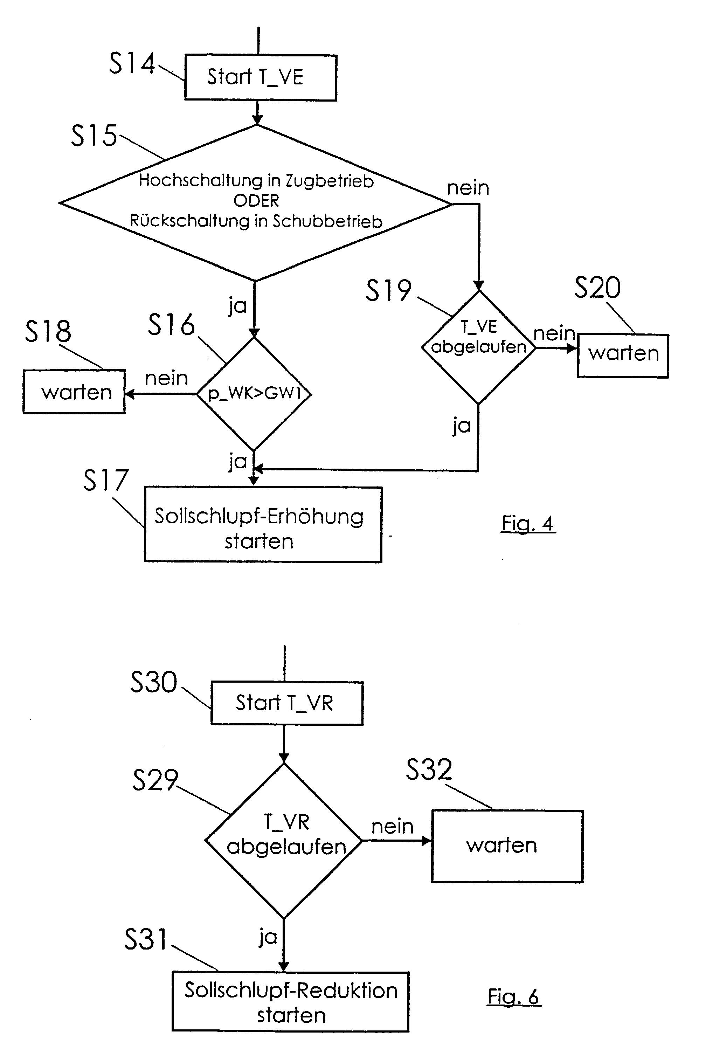

Während der Aufbau des Prüfmodules S3 nach Fig. 2 rein zeitgesteuert ist und die Variante nach Fig. 3 rein ereignisgesteuert ist, stellt der Aufbau des Prüfmodules S3 nach Fig. 4 eine Kombination der zuvor beschriebenen Ausführungsarten dar.

Nach der Ausführung gemäß Fig. 4 wird in dem Prüfmodul S3 zunächst in einer Verarbeitungsfunktion S14 eine vordefinierte Verzögerungszeit zur Soll schlupf-Erhöhung T_VE bei Eingang des Schaltbefehles gestartet. Unabhängig davon wird in einer Unterscheidungsfunktion S15 geprüft, ob ein Signal "Hochschaltung in Zugbetrieb" oder ein Signal "Rückschaltung in Schubbetrieb" vorliegt. Falls ein Signal "Hochschaltung in Zugbetrieb" oder "Rückschaltung in Schubbetrieb" erkannt wird, aktiviert die Unterscheidungsfunktion S15 eine weitere Unterscheidungsfunktion S16, in der geprüft wird, ob der Wandlerkupplungsdruck p_WK größer als ein erster Grenzwert GW1 ist. Wenn die Unterscheidungsfunktion S16 das Ergebnis liefert, daß der Wandlerkupplungsdruck p_WK größer als der Grenzwert GW1 ist, wird eine Verarbeitungsfunktion S17 zum Starten des Verarbeitungsmoduls S4 zur Sollschlupf-Erhöhung aktiviert. Falls das Abfrageergebnis der Unterscheidungsfunktion S16 jedoch negativ ist, wird eine Warteschleife S18 gestartet. Parallel zu diesen Abfragen läuft die Verzögerungszeit der Sollschlupf-Erhöhung T_VE, welche als zweites Kriterium zum Starten des Verarbeitungsmodules S4 zur Sollschlupf-Erhöhung dient, wenn in der Unterscheidungsfunktion S15 weder ein Signal "Hochschaltung in Zugbetrieb" noch ein Signal "Rückschaltung in Schubbetrieb" erkannt wird. In diesem Fall wird in einer Unterscheidungsfunktion S19 geprüft, ob die vordefinierte Verzögerungszeit bis zur Sollschlupf-Erhöhung T_VE abgelaufen ist. Wenn die Zeit T_VE als abgelaufen erkannt wird, wird in die Verarbeitungsfunktion S17 zum Starten des Verarbeitungsmodules S4 zur Sollschlupf-Erhöhung verzweigt, anderenfalls wird bis zum Ablauf der Zeit T_VE eine Warteschleife S20 gestartet.

Der Grenzwert GW1 für den Wandlerkupplungsdruck p_WK stellt dabei einen vorgegebenen Schwell-Druck p_WK_schwell dar, wobei der Schwell-Druck p_WK_schwell konstant sein kann oder von einer Motor-Drehzahl n_Mot abhängig sein kann.

Ergibt das Prüfmodul S3 das Ergebnis, daß das Startkriterium für das Verarbeitungsmodul S4 zur Sollschlupf-Erhöhung erfüllt ist, wird dieses abgearbeitet.

Unter Sollschlupf-Erhöhung versteht man, daß ein vorhandener Sollschlupf dn_soll mit einer zusätzlichen Schlupf-Rampenfunktion bzw. Übergangs funktion additiv überlagert wird, so daß der Schlupf dn_soll über der Zeit bis zu einem applizierbaren Maximalwert zunimmt.

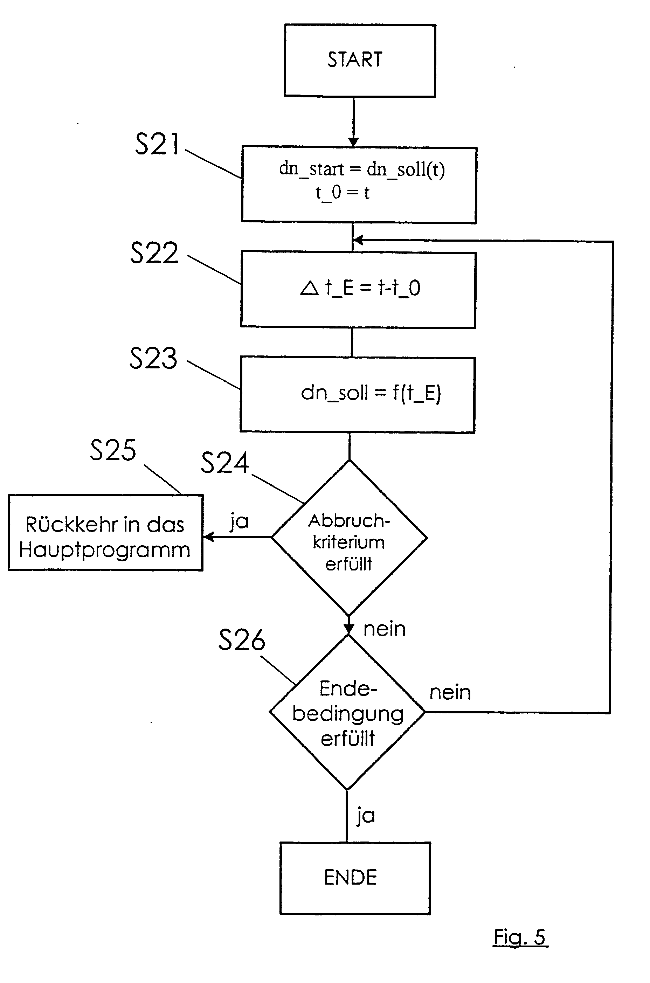

Fig. 5 zeigt schematisch, wie eine Sollschlupf-Vorgabe zur Sollschlupf-Erhöhung in dem Verarbeitungsmodul S4 realisiert wird. Der Startwert, welcher in einer ersten Verarbeitungsfunktion S21 zu einer Startzeit t_0 beim Beginn der Schaltung eingelesen wird, ist der aktuelle Sollschlupf dn_start. Der Ziel-Schlupfwert dn_soll_ziel, welcher einen Maximalwert im Bereich des Synchronpunktes darstellt, ist abhängig von der Schaltung, z. B. vom ersten in den zweiten Gang. Er wird entweder analytisch oder aus einem Kennfeld abhängig von einem Drosselklappenwinkel Dki und der Turbinendrehzahl ermittelt.

In einer Verarbeitungsfunktion S22 wird in dem Verarbeitungsmodul S4 zur Sollschlupf-Erhöhung eine Zeitschleife gemäß der Funktion (t_E = t - t_0) mit einer Erhöhungszeit t_E, der aktuellen Zeit t und der Startzeit t_0 gestartet.

Während der Übergangszeit wird der Sollschlupf in dem Verarbeitungsmodul S4 zur Sollschlupf-Erhöhung in einer Verarbeitungsfunktion S23 mit einer Übergangs funktion in Abhängigkeit der Erhöhungszeit t_E ermittelt. Der Übergang vom Start-Schlupf dn_start aus erfolgt dabei kontinuierlich, d. h. nicht sprunghaft.

Eine geeignete Übergangsfunktion zur Sollschlupferhöhung läßt sich wie folgt wiedergeben:

$$dn\_soll(t\_E) = dn\_start + [dn\_soll\_ziel - dn\_start] *$$

$$(t\_E/T\_E)\ EXP\ (1/P) + dn\_soll\_basis$$

worin t_E die Erhöhungszeit, T_E die vorgegebene Dauer der Sollschlupf-Erhöhung, dn_start den Start-Sollschlupf, dn_soll_ziel den vorgebenen Ziel-Sollschlupf, dn_soll_basis den vorgegebenen Basis-Sollschlupf und P den Progressionsfaktor darstellen.

Alternativ hierzu läßt sich der Sollschlupf während der Sollschlupf-Erhöhung in dem Verarbeitungsmodul S4 gemäß folgender Übergangsfunktion ermitteln:

$$dn\_soll(t\_E) = dn\_start + [dn\_soll\_ziel - dn\_start] *$$

$$sin((\pi/2)*(t\_E/T\_E)\ EXP\ P) + dn\_soll\_basis$$

Der Verlauf des Sollschlupfes während der Sollschlupf-Erhöhung nach dieser Übergangsfunktion ist in Fig. 11 dargestellt, wobei sich die unterschiedlichen Kurven aus der Verwendung unterschiedlicher Progressionsfaktoren mit den Werten 0.5, 1, 2, 3 ergeben. Wie aus Fig. 11 ersichtlich ist, verlaufen die Kurven "bauchig", wobei sich bei Verwendung eines Progressionsfaktors mit dem Wert 1 anfangs ein quasi-linearer Verlauf ergibt.

Eine weitere Übergangs funktion zur Sollschlupf-Erhöhung als Alternative zu den beiden zuletzt genannten Übergangsfunktionen läßt sich wie folgt angeben:

$$dn\_soll(t\_E) = dn\_start + dn\_soll\_grad * t\_E +$$

$$dn\_soll\_basis$$

worin dn_soll_grad wiederum einen Sollschlupf-Gradienten darstellt.

Des weiteren wird in dem Verarbeitungsmodul S4 zur Sollschlupf-Erhöhung in einer Unterscheidungsfunktion S24 geprüft, ob ein Abbruchkriterium erfüllt ist. So wird das Verarbeitungsmodul S4 zur Sollschlupf-Erhöhung abgebrochen, wenn ein Schaltungsabbruch oder ein Signal "Sollschlupf-Reduktion" erkannt wird.

Sobald in der Unterscheidungsfunktion S24 des Verarbeitungsmodules S4 eines dieser Abbruchkriterien erkannt wird, wird eine Verarbeitungsfunktion 525 zur Rückkehr in das Hauptprogramm gestartet, andernfalls wird eine Unterscheidungsfunktion S26 zur Prüfung, ob eine Endebedingung erfüllt ist, aktiviert.

Das Verarbeitungsmodul S4 wird in der in Rede stehenden Ausführungsvariante beendet, wenn in der Unterscheidungsfunktion S26 erkannt wird, daß der Wandlerkupplungsdruck p_WK kleiner oder gleich dem Schwell-Druck p_WK_schwell ist, die vorgegebene Dauer der Sollschlupf-Erhöhung T_E abgelaufen ist, oder daß der Sollschlupf dn_soll größer oder gleich dem Ziel-Sollschlupf dn_soll_ziel ist.

Wenn keine der zuvor genannten Endebedingungen erfüllt ist, wird im Verarbeitungsmodul S4 zur Sollschlupf-Erhöhung in die Zeitschleife S22 zurückverzweigt.

Wird dagegen eine der Endebedingungen als erfüllt erkannt, wird das Verarbeitungsmodul S4 zur Sollschlupf-Erhöhung beendet und von dort in das Unterprogramm zur Soll schlupf-Vorgabe während einer Schaltung der Wandlerkupplung gemäß Fig. 1 verzweigt, indem ein Prüfmodul S27 zur Prüfung, ob ein vorgegebenes Startkriterium für eine Sollschlupf-Reduktion erfüllt ist, gestartet wird.

Nach Beendigung der Sollschlupf-Erhöhung wird der maximale Sollschlupf dn_soll_ziel bis zu dem Zeitpunkt beibehalten, ab dem die Sollschlupf-Reduktion erfolgt.

Analog zu der Prüfung, ob ein vorgegebenes Startkriterium zur Sollschlupf-Erhöhung erfüllt ist, wie sie in dem Prüfungsmodul 53 durchgeführt wird, gibt es verschiedene Varianten zur Prüfung, ob ein Startkriterium für ein Verarbeitungsmodul S28 zur Sollschlupf-Reduktion auf einen vorgegebenen Sollschlupf dn_soll erfüllt ist.

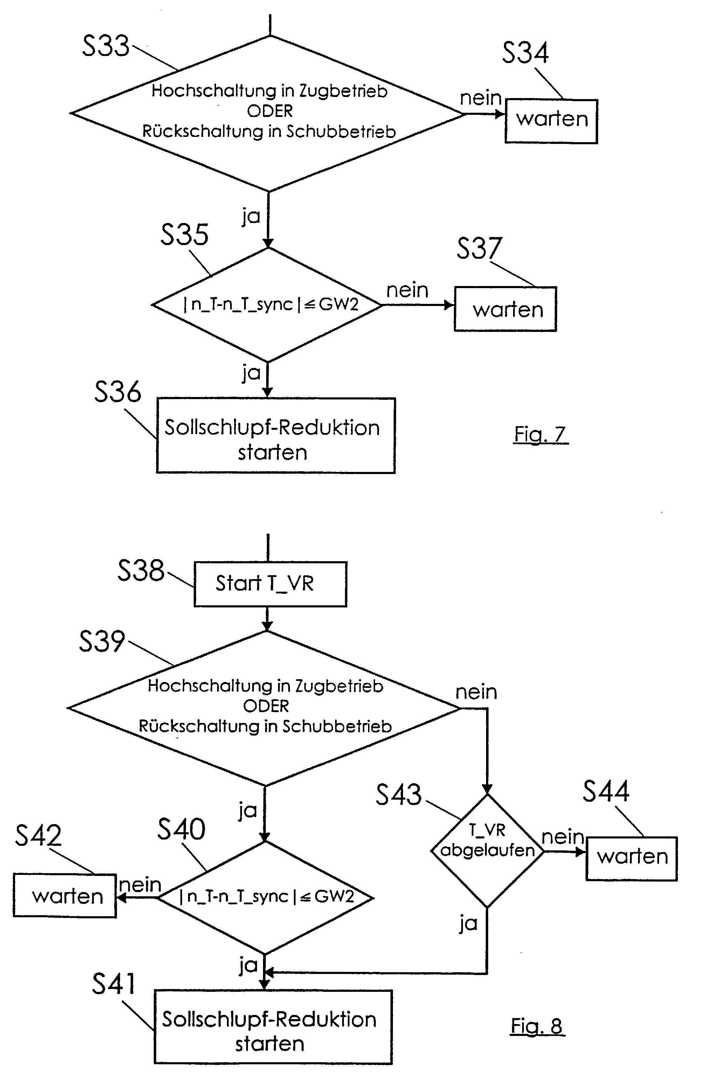

Fig. 6 zeigt ein Ausführungsbeispiel des Prüfmodules 527, bei dem in einer ersten Unterscheidungsfunktion S29 geprüft wird, ob eine vordefinierte Verzögerungszeit bis zur Sollschlupf-Reduktion T_VR, welche in einer Verarbeitungsfunktion S30 zuvor gestartet wurde, abgelaufen ist. Der Start der vorgegebenen Verzögerungszeit zur Sollschlupf-Reduktion T_VR erfolgt dabei gleichzeitig mit dem Start der Verzögerungszeit zur Sollschlupf-Erhöhung in der Verarbeitungsfunktion S14. Wenn die Verzögerungszeit bis zur Sollschlupf-Reduktion T_VR abgelaufen ist, wird eine Verarbeitungsfunktion S31 zum Starten des Verarbeitungsmodules S28 zur Sollschlupf-Reduktion aktiviert, anderenfalls wird eine Warteschleife S32 gestartet.

Fig. 7 zeigt eine alternative Ausführung des Prüfmodules S27, in dem zur Prüfung, ob ein vorgegebenes Startkriterium für das Verarbeitungsmodul S28 zur Sollschlupf-Reduktion erfüllt ist, in einer ersten Unterscheidungsfunktion S33 geprüft wird, ob ein Signal "Hochschaltung in Zugbetrieb" oder ein Signal „Rückschaltung in Schubbetrieb" vorliegt. Wenn keines dieser Signale erkannt wird, wird eine Warteschleife S34 gestartet. Für den Fall, daß in der Unterscheidungsfunktion S33 ein Signal "Hochschaltung in Zugbetrieb" oder „Rückschaltung in Schubbetrieb" erkannt wird, wird eine weitere Unterscheidungsfunktion S35 gestartet, in der geprüft wird, ob eine Differenz aus einer Turbinendrehzahl n_T und einer Synchrondrehzahl n_T_sync gemäß der Formel ln_T - n_T_syncl kleiner oder gleich einem Grenzwert GW2 ist. Wenn die Turbinendrehzahldifferenz ln_T - n_T_syncl kleiner oder gleich dem Grenzwert GW2 ist, wird eine Verarbeitungsfunktion S36 zum Starten des Verarbeitungsmodules S28 zur Sollschlupf-Reduktion aktiviert, anderenfalls wird eine Warteschleife S37 gestartet.

Fig. 8 zeigt eine weitere Alternative für eine Gestaltung des Prüfmodules S27 zur Prüfung, ob ein Startkriterium zur Sollschlupf-Reduktion erfüllt ist, wobei diese Ausführungsform eine Kombination der beiden zuletzt beschriebenen Varianten darstellt. Bei dem Verfahren nach Fig. 8 wird gleichzeitig mit dem Starten der vordefinierten Verzögerungszeit zur Sollschlupf-Erhöhung T_VE in einer Verarbeitungsfunktion S38 die vordefinierte Verzögerungszeit zur Sollschlupf-Reduktion T_VR gestartet. In dem Prüfmodul S27 wird zunächst in einer Unterscheidungsfunktion S39 festgestellt, ob ein Signal "Hochschaltung in Zugbetrieb" oder ein Signal "Rückschaltung in Schubbetrieb" vorliegt. Wenn eines dieser Signale erkannt wird, wird eine weitere Unterscheidungsfunktion S40 gestartet, in der geprüft wird, ob eine Differenz aus einer Turbinendrehzahl n_T und einer Synchrondrehzahl n_T_sync gemäß der Formel ln_T - n_T_syncl kleiner oder gleich dem Grenzwert GW2 ist. Falls dies zutrifft, wird eine Verarbeitungsfunktion S41 zum Starten des Verarbeitungsmodules S28 zur Sollschlupf-Reduktion aktiviert, anderenfalls wird eine Warteschleife S42 gestartet.

Im Falle, daß die Unterscheidungsfunktion S39 das Ergebnis liefert, daß weder ein Signal "Hochschaltung in Zugbetrieb" noch ein Signal "Rückschaltung in Schubbetrieb" vorliegt, wird in einer Unterscheidungsfunktion S43 geprüft, ob die vorgegebene Verzögerungsdauer bis zur Sollschlupf-Reduktion T_VR abgelaufen ist. Wenn dies zutrifft, wird in die Verarbeitungsfunktion S41 zum Starten des Verarbeitungsmodules S28 zur Sollschlupf-Reduktion verzweigt. Wenn die Verzögerungszeit T_VR jedoch noch nicht abgelaufen ist, wird eine Warteschleife S44 gestartet.

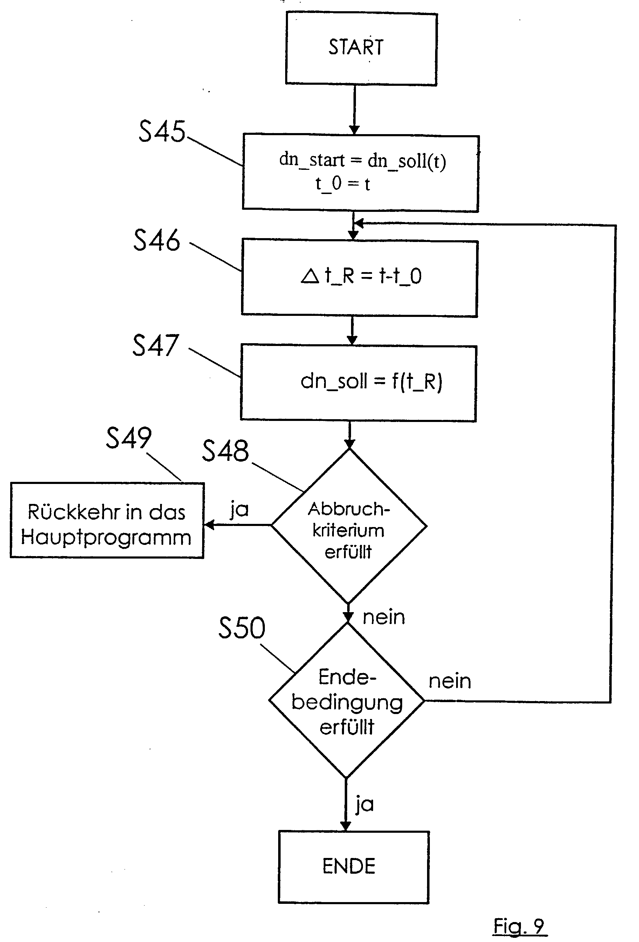

Bezug nehmend auf Fig. 9 ist schematisch eine Abfolge von Verfahrensschritten, welche in dem Verarbeitungsmodul S28 der Sollschlupf-Reduktion abgearbeitet werden, dargestellt. Die Sollschlupf-Vorgabe bei der Sollschlupf-Reduktion erfolgt dabei analog zur Vorgehensweise bei der Sollschlupf-Erhöhung in dem Verarbeitungsmodul S4.

Wie in dem Flußdiagramm nach Fig. 9 ersichtlich ist, wird nach dem Start des Verarbeitungsmodules S28 in einer ersten Verarbeitungsfunktion S45 der momentane Sollschlupf zu einer Startzeit t_0 als Sollschlupf-Startwert dn_start eingelesen. In einer nachfolgenden Verarbeitungsfunktion S46 wird eine Zeitschleife t_R für die Reduktionszeit t_R gestartet, welche eine Differenz aus einer aktuellen Zeit t minus der Startzeit t_0 darstellt.

Für die Dauer des Übergangs von dem Start-Schlupfwert dn_start auf den vorgegebenen Ziel-Schlupfwert dn_ziel für die Reduktion wird der Sollschlupf dn_soll in einer weiteren Verarbeitungsfunktion S47 gemäß einer Übergangsfunktion in Abhängigkeit von der Reduktionszeit t_R ermittelt.

Die Reduzierung des Sollschlupfwertes dn_soll über der Zeit erfolgt in dem Verarbeitungsmodul S28 anhand einer Übergangs funktion, deren Verlauf sich durch einen applizierbaren Progressionsfaktor P einstellen läßt. Eine geeignete Übergangs funktion zur Reduktion des Schlupfwertes dn_soll über die Reduktionszeit t_R läßt sich wie folgt angeben:

$$dn\_soll(t\_R) = dn\_start - [dn\_start - dn\_soll\_ziel]\ *$$

$$(t\_R/T\_R)\ EXP\ (1/P) + dn\_soll\_basis$$

wobei t_R für die Reduktionszeit, T_R für die vorgegebene Dauer der Sollschlupf-Reduktion, dn_start für den Start-Sollschlupf, dn_soll_ziel für den vorgegebenen Ziel-Sollschlupf, dn_soll_basis für einen vorgegebenen Basis-Sollschlupf und P für einen Progressionsfaktor stehen.

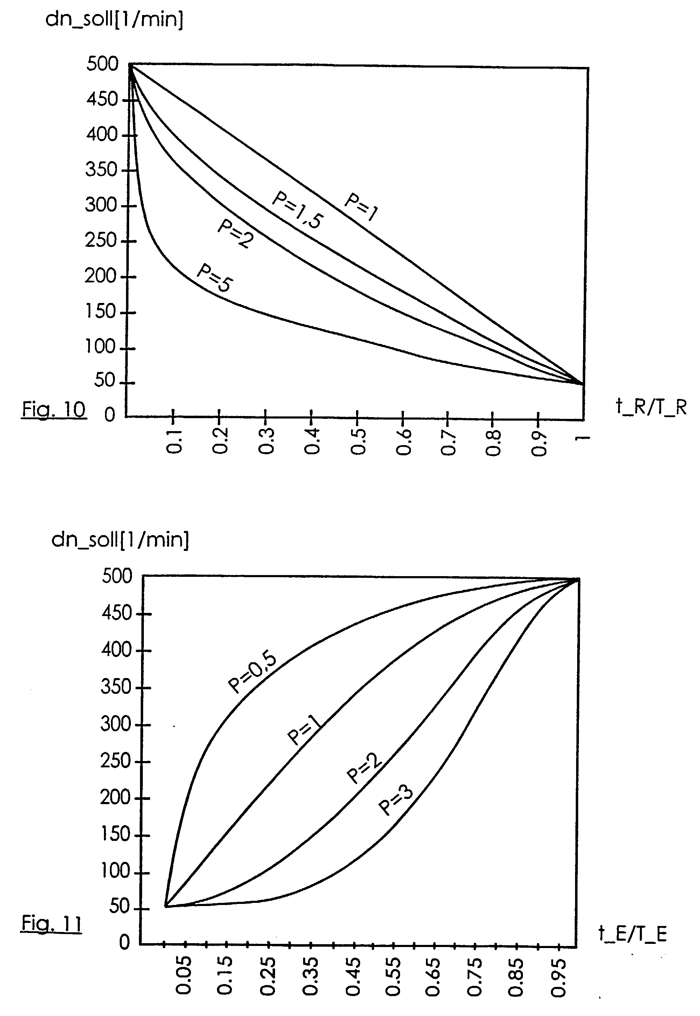

Ein Sollschlupfverlauf gemäß dieser Funktion ist in Fig. 10 prinzipmäßig dargestellt, wobei für den Progressionsfaktor P die Werte 1, 1.5, 2, 5 eingesetzt wurden. Wie in Fig. 10 ersichtlich ist, läßt sich mit einem Progressionsfaktor, welcher den Wert 1 hat, der lineare Verlauf der Sollschlupf-Reduktion exakt darstellen.

Alternativ zu der oben aufgeführten Übergangs funktion kann zur Sollschlupf-Reduktion in dem Verarbeitungsmodul S28 ebenso folgende Übergangsfunktion verwendet werden:

$$dn\_soll(t\_R) = dn\_start - [dn\_start - dn\_soll\_ziel]\ *$$

$$sin((\pi/2)*(t\_R/T\_R)\ EXP\ P) + dn\_soll\_basis$$

Graphisch dargestellt verläuft der Sollschlupf dn_soll (t_R) mit dieser Funktion "bauchiger", wobei sich bei Einsetzen eines Progressionsfaktors P mit dem Wert 1 anfangs ein quasi-linearer Verlauf ergibt.

Des weiteren läßt sich in dem Verarbeitungsmodul S28 zur Sollschlupf-Reduktion der Sollschlupf dn_soll als Alternative zu den oben genannten Übergangsfunktionen gemäß folgender Funktion ermitteln:

$$dn\_soll(t\_R) = dn\_start - dn\_soll\_grad\ *\ t\_R +$$

$$dn\_soll\_basis$$

wobei dn_soll_grad für einen Sollschlupf-Gradienten steht.

Bei der Abarbeitung der Verarbeitungsfunktion S47 mit einer der zuvor genannten Übergangsfunktionen zur Reduzierung des Sollschlupfes dn_soll während der Reduktionszeit t_R wird in einer Unterscheidungsfunktion S48 geprüft, ob ein Abbruchkriterium erfüllt ist. So wird das Verarbeitungsmodul S28 zur Sollschlupf-Reduktion abgebrochen, wenn ein Schaltungsabbruch oder ein Signal "Sollschlupf-Erhöhung" erkannt wird. Wenn eines dieser Abbruchkriterien in der Unterscheidungsfunktion S48 erkannt wird, wird in eine Verarbeitungsfunktion S49 zur Rückkehr in das Hauptprogramm verzweigt.

Falls keines dieser Abbruchkriterien als erfüllt angesehen wird, wird in einer weiteren Unterscheidungsfunktion S50 geprüft, ob eine Endebedingung zur Beendigung des Verarbeitungsmodules S28 erfüllt ist. In dem vorliegenden Ausführungsbeispiel wird das Verarbeitungsmodul S28 beendet, wenn der Sollschlupf dn_soll kleiner oder gleich einer Summe aus dem vorgegebenen Ziel-Sollschlupf dn_soll_ziel und dem Schwell-Sollschlupf dn_soll_schwell ist oder die vorgegebene Dauer für die Sollschlupf-Reduktion T_R abgelaufen ist. Danach wird wieder in das Unterprogramm zur Sollschlupfvorgabe bei einer Getriebeschaltung gemäß Fig. 1 zurückverzweigt. Wird jedoch in der Unterscheidungsfunktion S50 des Verarbeitungsmodules S28 zur Sollschlupf-Reduktion festgestellt, daß keine der Endebedingungen erfüllt ist, wird in die Zeitschleife S46 zurückverzweigt und das Verarbeitungsmodul S28 weiter abgearbeitet.

Nach der Abarbeitung des Verarbeitungsmodules S28 zur Sollschlupf-Reduktion wird in das Unterprogramm zur Sollschlupfvorgabe während einer Schaltung der Wandlerkupplung zurückgekehrt, indem eine Verarbeitungsfunktion S51 zur Rückkehr in das Hauptprogramm gestartet wird.

Bezugszeichen

| Dki | Drosselklappenwinkel |
| dn_schwell | Schwellschlupf |

| | |
|---|---|
| dn_soll | Soll-Schlupf |
| dn_soll_basis | Basis-Sollschlupf |
| dn_soll_diff | Schlupfdifferenz |
| dn_soll_grad | Sollschlupf-Gradient |
| dn_soll_ziel | Ziel-Sollschlupf |
| dn_start | Start-Sollschlupf |
| GW1 | Grenzwert |
| GW2 | Grenzwert |
| n_Mot | Motor-Drehzahl |
| n_T | Turbinendrehzahl |
| n_T_sync | Synchrondrehzahl |
| n_Turb_grad | Gradient der Turbinendrehzahl |
| P | Progressionsfaktor |
| p_WK | Wandlerkupplungsdruck |
| p_WK_schwell | Schwell-Druck |
| S1, S6, S9, S11, S15, S16, S19, S24, S26, S29, S33, S35, S39, S40, S43, S48, S50 | Unterscheidungsfunktion |
| S5, S7, S12, S14, S17, S21, S22, S23, S25, S30, S31, S36, S38, S41, S45, S46, S47, S49, S51 | Verarbeitungsfunktion |
| S4, S28 | Verarbeitungsmodul |
| S3, S27 | Prüfmodul |
| S2, S8, S10, S13, S18, S20, S32, S34, S37, S42, S44 | Warteschleife |
| t | aktueller Zeitwert |
| t_0 | Startzeit |
| t_E | Erhöhungszeit |
| t_R | Reduktionszeit |
| $\Delta$ t_E | Zeitschleife der Erhöhungszeit |
| $\Delta$ t_R | Zeitschleife der Reduktionszeit |
| T_E | Dauer der Sollschlupf-Erhöhung |
| T_Mot | Motor-Drehmoment |
| T_Mot_schwell | Motor-Schwell-Drehmoment |
| T_R | Dauer der Sollschlupf-Reduktion |
| WK | Wandlerkupplung |

**Patentansprüche**

1.  Verfahren zur Steuerung und Regelung eines Schaltvorganges einer Wandlerkupplung (WK) mit einem Sollschlupf, wobei die Wandlerkupplung eine Regelstrecke darstellt, welche in einem Regelkreis, der eine Führungsgröße und eine Regelgröße aufweist, einem Regler nachgeschaltet ist, **gekennzeichnet** durch folgende Verfahrensschritte:

    a) in einer ersten Unterscheidungsfunktion (S1) wird geprüprüft, ob ein Befehl zu einer Getriebeschaltung vorliegt,
    b) bei positivem Abfrageergebnis wird ein Prüfmodul (S3) gestartet, zur Prüfung, ob ein vorgegebenes Startkriterium für ein Verarbeitungsmodul (54) zur Sollschlupf-Erhöhung erfüllt ist,
    c) bei positivem Abfrageergebnis des Prüfmodules (S3) wird das Verarbeitungsmodul (S4) zur Sollschlupf-Erhöhung gestartet und abgearbeitet,
    d) wenn das Verarbeitungsmodul (S4) zur Sollschlupf-Erhöhung beendet ist, wird in einem weiteren Prüfmodul (S27) geprüft, ob ein vorgegebenes Startkriterium für ein Verarbeitungsmodul (S28) zur Sollschlupf-Reduktion auf einen vorgegebenen Sollschlupf (dn_soll) erfüllt ist,

7

e) bei positivem Abfrageergebnis des Prüfmodules (S27) wird das Verarbeitungsmodul (S28) zur Sollschlupf-Reduktion gestartet und abgearbeitet,

f) wenn das Verarbeitungsmodul (S28) zur Sollschlupf-Reduktion beendet oder abgebrochen wird, wird eine Verarbeitungsfunktion (S49, S51) zur Rückkehr in ein Hauptprogramm aktiviert.

2. Verfahren nach Anspruch 1 dadurch **gekennzeichnet,** daß in dem Prüfmodul (S3) zur Prüfung, ob ein vorgegebenes Startkriterium für das Verarbeitungsmodul (S4) zur Sollschlupf-Erhöhung erfüllt ist, folgende Verfahrensschritte durchgeführt werden:

a) in einer ersten Unterscheidungsfunktion (S6) wird geprüft, ob eine vordefinierte Verzögerungszeit bis zur Sollschlupf-Erhöhung (T_VE), welche in einer Verarbeitungsfunktion (S5) gestartet wird, abgelaufen ist,

b) bei positivem Abfrageergebnis der Unterscheidungsfunktion (S6) wird eine Verarbeitungsfunktion (S7) zum Starten des Verarbeitungsmodules (S4) zur Sollschlupf-Erhöhung aktiviert, falls die Verzögerungszeit (T_VE) nicht abgelaufen ist, wird eine Warteschleife (S8) gestartet.

3. Verfahren nach Anspruch 1, dadurch **gekennzeichnet,** daß in dem Prüfmodul (S3) zur Prüfung, ob ein vorgegebenes Startkriterium für ein Verarbeitungsmodul (S4) zur Sollschlupf-Erhöhung erfüllt ist, folgende Verfahrensschritte durchgeführt werden:

c) in einer ersten Unterscheidungsfunktion (S9) wird geprüft, ob ein Signal "Hochschaltung in Zugbetrieb" oder ein Signal "Rückschaltung in Schubbetrieb" vorliegt,

d) falls das Signal "Hochschaltung in Zugbetrieb" oder das Signal "Rückschaltung in Schubbetrieb" erkannt wird, wird eine weitere Unterscheidungsfunktion (S11) gestartet, zur Prüfung, ob ein Wandlerkupplungsdruck (p_WK) größer als ein erster Grenzwert (GW1) ist, falls das Abfrageergebnis der Unterscheidungsfunktion (S9) negativ ist, wird eine Warteschleife (S10) aktiviert,

e) wenn der Wandlerkupplungsdruck (p_WK) größer als der Grenzwert (GW1) ist, wird eine Verarbeitungsfunktion (S12) zum Starten des Verarbeitungsmodules (S4) zur Sollschlupf-Erhöhung aktiviert, anderenfalls wird eine Warteschleife (S13) gestartet.

4. Verfahren nach Anspruch 1, dadurch **gekennzeichnet,** daß in dem Prüfmodul (S3) zur Prüfung, ob ein vorgegebenes Startkriterium für ein Verarbeitungsmodul (S4) zur Sollschlupf-Erhöhung erfüllt ist, folgende Verfahrensschritte durchgeführt werden:

a) in einer ersten Unterscheidungsfunktion (S15) wird geprüft, ob ein Signal "Hochschaltung in Zugbetrieb" oder ein Signal "Rückschaltung in Schubbetrieb" vorliegt,

b) falls das Signal "Hochschaltung in Zugbetrieb" oder das Signal "Rückschaltung in Schubbetrieb" erkannt wird, wird eine weitere Unterscheidungsfunktion (S16) gestartet, zur Prüfung, ob ein Wandlerkupplungsdruck (p_WK) größer als ein erster Grenzwert (GW1) ist,

c) wenn der Wandlerkupplungsdruck (p_WK) größer als der Grenzwert (GW1) ist, wird eine Verarbeitungsfunktion (S17) zum Starten des Verarbeitungsmodules (S4) zur Sollschlupf-Erhöhung aktiviert, anderenfalls wird eine Warteschleife (S18) gestartet,

d) falls das Abfrageergebnis der Unterscheidungsfunktion (S15) zur Prüfung, ob ein Signal "Hochschaltung in Zugbetrieb" oder ein Signal "Rückschaltung in Schubbetrieb" vorliegt, negativ ist, wird in einer Unterscheidungsfunktion (S19) geprüft, ob eine vordefinierte Verzögerungszeit zur Sollschlupf-Erhöhung (T_VE), welche in einer Verarbeitungsfunktion (S14) gestartet wird, abgelaufen ist,

e) bei positivem Abfrageergebnis der Unterscheidungsfunktion (S19) wird in die Verarbeitungsfunktion (S17) zum Starten des Verarbeitungsmodules (S4) zur Sollschlupf-Erhöhung verzweigt, falls die Verzögerungszeit (T_VE) nicht abgelaufen ist, wird eine Warteschleife (S20) gestartet.

5. Verfahren nach Anspruch 3 oder 4, dadurch **gekennzeichnet,** daß der erste Grenzwert (GW1) für den Wandlerkupplungsdruck (p_WK) ein vorgegebener Schwell-Druck (p_WK_schwell) ist.

6. Verfahren nach Anspruch 5, dadurch **gekennzeichnet,** daß der Schwell-Druck (p_WK_schwell) konstant ist.

7. Verfahren nach Anspruch 5, dadurch **gekennzeichnet,** daß der Schwell-Druck (p WK schwell) eine Funktion der Motordrehzahl (n_Mot) darstellt.

8. Verfahren nach einem der Ansprüche 1 bis 7, dadurch **gekennzeichnet,** daß in dem Verarbeitungsmodul (54) zur Sollschlupf-Erhöhung folgende Verfahrensschritte abgearbeitet werden:

a) in einer ersten Verarbeitungsfunktion (S21) wird zu einer Startzeit (t_0) der aktuelle Sollschlupfwert (dn_soll) eingelesen,

b) in einer nachfolgenden Verarbeitungsfunktion (S22) wird eine Zeitschleife gemäß der Funktion (t_E = t - t_0) mit (t_E) für Erhöhungszeit, (t) für aktuelle Zeit und (t_0) für Startzeit gestartet,

c) in einer weiteren Verarbeitungsfunktion (S23) wird der Sollschlupf (dn_soll) gemäß einer Übergangsfunktion (dn_soll = f(t_E)) ermittelt,

d) in einer Unterscheidungsfunktion (S24) wird geprüft, ob ein Abbruchkriterium erfüllt ist,

e) falls in der Unterscheidungsfunktion (S24) erkannt wird, daß ein Abbruchkriterium erfüllt, wird in eine Verarbeitungsfunktion (S25) zur Rückkehr in das Hauptprogramm verzweigt, andernfalls wird in eine Unterscheidungsfunktion (S26) zur Prüfung, ob ein Endebedingung erfüllt ist, verzweigt,

f) wenn in der Unterscheidungsfunktion (S26) erkannt wird, daß eine Endebedingung erfüllt ist, wird das Verarbeitungsmodul (S4) zur Sollschlupf-Erhöhung beendet, anderenfalls wird in die Zeitschleife (S22) zurückverzweigt.

9. Verfahren nach einem der Ansprüche 1 bis 8, dadurch **gekennzeichnet,** daß in dem Verarbeitungsmodul (S4) zur Sollschlupf-Erhöhung der Sollschlupf (dn_soll) gemäß der Übergangsfunktion

$$\{dn\_soll(t\_E) = dn\_start + [dn\_soll\_ziel - dn\_start ] *$$

$$(t\_E/T\_E) \, EXP \, (1/P) + dn\_soll\_basis\}$$

errechnet wird, mit (t_E) für Erhöhungszeit, (T_E) für vorgegebene Dauer der Sollschlupf-Erhöhung, (dn_start) für Start-Sollschlupf, (dn_soll_ziel) für vorgegebener Ziel-Sollschlupf, (dn_soll_basis) für vorgegebener Basis-Sollschlupf und (P) für einen Progressionsfaktor.

10. Verfahren nach einem der Ansprüche 1 bis 8, dadurch **gekennzeichnet,** daß in dem Verarbeitungsmodul (S4) zur Sollschlupf-Erhöhung der Soll-schlupf (dn_soll) gemäß der Übergangsfunktion

$$\{dn\_soll(t\_E) = dn\_start + [dn\_soll\_ziel - dn\_start ] *$$

$$sin((\pi/2)*(t\_E/T\_E) \, EXP \, P) + dn\_soll\_basis\}$$

errechnet wird, mit (t_E) für Erhöhungszeit, (T_E) für vorgegebene Dauer der Sollschlupf-Erhöhung, (dn_start) für Start-Sollschlupf, (dn_soll_ziel) für vorgegebener Ziel-Sollschlupf, (dn_soll_basis) für vorgegebener Basis-Sollschlupf und (P) für einen Progressionsfaktor.

11. Verfahren nach einem der Ansprüche 1 bis 8, dadurch **gekennzeichnet,** daß in dem Verarbeitungsmodul (S4) zur Sollschlupf-Erhöhung der Soll-schlupf (dn_soll) gemäß der Übergangsfunktion

$$\{dn\_soll(t\_E) = dn\_start + dn\_soll\_gradient * t\_E +$$

$$dn\_soll\_basis]$$

errechnet wird, mit (t_E) für Erhöhungszeit, (dn_start) für Start-Sollschlupf, (dn_soll_gradient) für Sollschlupf-Gradient und (dn_soll_basis) für vorgegebener Basis-Sollschlupf.

12. Verfahren nach einem der Ansprüche 8 bis 11, dadurch **gekennzeichnet,** daß das dem Verarbeitungsmodul (54) zur Sollschlupf-Erhöhung zugeordnete Abbruchkriterium als erfüllt erkannt wird, wenn ein Schaltungsabbruch oder ein Signal "Sollschlupf-Reduktion" festgestellt wird.

13. Verfahren nach einem der Ansprüche 8 bis 11, dadurch **gekennzeichnet,** daß das Verarbeitungsmodul (S4) zur Sollschlupf-Erhöhung beendet wird, wenn erkannt wird, daß

a) der Wandlerkupplungsdruck p_WK kleiner oder gleich dem Schwell-Druck (p_WK_schwell) ist, oder

b) die vorgegebene Dauer der Sollschlupf-Erhöhung (T_E) abgelaufen ist, oder

c) der Sollschlupf (dn_soll) größer oder gleich dem Ziel-Sollschlupf (dn_soll_ziel) ist.

14. Verfahren nach einem der Ansprüche 1 bis 13, dadurch **gekennzeichnet,** daß in dem Prüfmodul (S27) zur Prüfung, ob ein vorgegebenes Startkriterium für das Verarbeitungsmodul (S28) zur Sollschlupf-Reduktion erfüllt ist, folgende Verfahrensschritte durchgeführt werden:

a) in einer ersten Unterscheidungsfunktion (S29) wird geprüft, ob eine vordefinierte Verzögerungszeit bis zur Sollschlupf-Reduktion (T_VR), welche in einer Verarbeitungsfunktion (S30) gestartet wird, abgelaufen ist,
b) bei positivem Abfrageergebnis der Unterscheidungsfunktion (S29) wird eine Verarbeitungsfunktion (S31) zum Starten des Verarbeitungsmodules (S28) zur Sollschlupf-Reduktion aktiviert, falls die Verzögerungszeit (T_VR) nicht abgelaufen ist, wird eine Warteschleife (S32) gestartet.

15. Verfahren nach einem der Ansprüche 1 bis 13, dadurch **gekennzeichnet,** daß in dem Prüfmodul (S27) zur Prüfung, ob ein vorgegebenes Startkriterium für das Verarbeitungsmodul (S28) zur Sollschlupf-Reduktion erfüllt ist, folgende Verfahrensschritte durchgeführt werden:

a) in einer ersten Unterscheidungsfunktion (S33) wird geprüft, ob ein Signal "Hochschaltung in Zugbetrieb" oder ein Signal "Rückschaltung in Schubbetrieb" vorliegt,
b) falls das Signal "Hochschaltung in Zugbetrieb" oder das Signal "Rückschaltung in Schubbetrieb" erkannt wird, wird eine weitere Unterscheidungsfunktion (S35) gestartet, zur Prüfung, ob eine Differenz aus einer Turbinendrehzahl (n_T) und einer Synchrondrehzahl (n_T_sync) gemäß der Formel ln_T - n_T_syncl kleiner oder gleich einem Grenzwert (GW2) ist, falls das Abfrageergebnis der Unterscheidungsfunktion (S33) negativ ist, wird eine Warteschleife (S34) aktiviert,
c) wenn die Differenz ln_T - n_T_syncl kleiner oder gleich dem Grenzwert (GW2) ist, wird eine Verarbeitungsfunktion (S36) zum Starten des Verarbeitungsmodules (S28) zur Sollschlupf-Reduktion aktiviert, anderenfalls wird eine Warteschleife (S37) gestartet.

16. Verfahren nach einem der Ansprüche 1 bis 13, dadurch **gekennzeichnet,** daß in dem Prüfmodul (S27) zur Prüfung, ob ein vorgegebenes Startkriterium für das Verarbeitungsmodul (S28) zur Sollschlupf-Reduktion erfüllt ist, folgende Verfahrensschritte durchgeführt werden:

a) in einer ersten Unterscheidungsfunktion (S39) wird geprüft, ob ein Signal "Hochschaltung in Zugbetrieb" oder ein Signal "Rückschaltung in Schubbetrieb" vorliegt,
b) falls das Signal "Hochschaltung in Zugbetrieb" oder das Signal "Rückschaltung in Schubbetrieb" erkannt wird, wird eine weitere Unterscheidungsfunktion (S40) gestartet, zur Prüfung, ob eine Differenz aus einer Turbinendrehzahl (n_T) und einer Synchrondrehzahl (n_T_sync) gemäß der Formel ln_T - n_T_syncl kleiner oder gleich einem Grenzwert (GW2) ist,
c) wenn die Differenz ln_T - n_T_syncl kleiner oder gleich dem Grenzwert (GW2) ist, wird eine Verarbeitungsfunktion (S41) zum Starten des Verarbeitungsmodules (S28) zur Sollschlupf-Reduktion aktiviert, anderenfalls wird eine Warteschleife (S42) gestartet,
d) falls das Abfrageergebnis der Unterscheidungsfunktion (S39) zur Prüfung, ob ein Signal "Hochschaltung in Zugbetrieb" oder ein Signal "Rückschaltung in Schubbetrieb" vorliegt, negativ ist, wird in einer Unterscheidungsfunktion (S43) geprüft, ob eine vordefinierte Verzögerungszeit bis zur Sollschlupf-Reduktion (T_VR), welche in einer Verarbeitungsfunktion (S38) gestartet wird, abgelaufen ist,
e) bei positivem Abfrageergebnis der Unterscheidungsfunktion (S43) wird in die Verarbeitungsfunktion (S41) zum Starten des Verarbeitungsmodules (S28) zur Sollschlupf-Reduktion verzweigt, falls die Verzögerungszeit (T_VR) nicht abgelaufen ist, wird eine Warteschleife (S44) gestartet.

17. Verfahren nach einem der Ansprüche 1 bis 16, dadurch **gekennzeichnet,** daß in dem Verarbeitungsmodul (S28) zur Sollschlupf-Reduktion folgende Verfahrensschritte abgearbeitet werden:

a) in einer ersten Verarbeitungsfunktion (S45) wird zu einer Startzeit (t_0) ein aktueller Sollschlupfwert (dn_start) eingelesen,
b) in einer nachfolgenden Verarbeitungsfunktion (S46) wird eine Zeitschleife gemäß der Funktion (t_R = t - t_0) mit (t_R) für Reduktionszeit, (t) für aktuelle Zeit und (t_0) für Startzeit gestartet,
c) in einer weiteren Verarbeitungsfunktion (S47) wird der Sollschlupf (dn_soll) gemäß einer Übergangsfunktion (dn_soll = f(t_R)) ermittelt,

d) in einer Unterscheidungsfunktion (S48) wird geprüft, ob ein Abbruchkriterium erfüllt ist,

e) falls in der Unterscheidungsfunktion (S48) erkannt wird, daß ein Abbruchriterium erfüllt ist, wird in eine Verarbeitungsfunktion (S49) zur Rückkehr in das Hauptprogramm verzweigt, andernfalls wird in eine Unterscheidungsfunktion (S50) zur Prüfung, ob ein Endebedingung erfüllt ist, verzweigt,

f) wenn in der Unterscheidungsfunktion (S50) erkannt wird, daß eine Endebedingung erfüllt ist, wird das Verarbeitungsmodul zur Sollschlupf-Reduktion beendet, anderenfalls wird in die Zeitschleife (S46) zurückverzweigt.

18. Verfahren nach einem der Ansprüche 1 bis 17, dadurch **gekennzeichnet,** daß in dem Verarbeitungsmodul (S28) zur Sollschlupf-Reduktion der Sollschlupf (dn_soll) gemäß der Übergangsfunktion

$$\{dn\_soll(t\_R) = dn\_start - [dn\_start - dn\_soll\_ziel] *$$

$$(t\_R/T\_R) \; EXP \; (1/P) + dn\_soll\_basis\}$$

ermittelt wird, mit (t_R) für Reduktionszeit, (T_R) für vorgegebene Dauer der Sollschlupf-Reduktion, (dn_start) für Start-Sollschlupf, (dn_soll_ziel) für vorgegebener Ziel-Sollschlupf, (dn_soll_basis) für vorgegebener Basis-Sollschlupf und P für einen Progressionsfaktor.

19. Verfahren nach einem der Ansprüche 1 bis 17, dadurch **gekennzeichnet,** daß in dem Verarbeitungsmodul (528) zur Sollschlupf-Reduktion der Soll-schlupf (dn_soll) gemäß der Übergangsfunktion

$$\{dn\_soll(t\_R) = dn\_start - [dn\_start - dn\_soll\_ziel] *$$

$$sin((\pi/2)*(t\_R/ \; T\_R) \; EXP \; P) + dn\_soll\_basis\}$$

errechnet wird, mit (t_R) für Reduktionszeit, (T_R) für vorgegebene Dauer der Sollschlupf-Reduktion, (dn_start) für Start-Sollschlupf, (dn_soll_ziel) für vorgegebener Ziel-Sollschlupf, (dn_soll_basis) für vorgegebener Basis-Sollschlupf und (P) für einen Progressionsfaktor.

20. Verfahren nach einem der Ansprüche 1 bis 17, dadurch **gekennzeichnet,** daß in dem Verarbeitungsmodul (S28) zur Sollschlupf-Reduktion der Sollschlupf (dn_soll) gemäß der Funktion

$$[dn\_soll(t\_R) = dn\_start - dn\_soll\_gradient * t\_R +$$

$$dn\_soll\_basis]$$

errechnet wird, mit t_R für Reduktionszeit, dn_start für Start-Sollschlupf, dn_soll_gradient für Sollschlupf-Gradient und dn_soll_basis als vorgegebener Basis-Sollschlupf.

21. Verfahren nach einem der Ansprüche 17 bis 20, dadurch **gekennzeichnet,** daß das dem Verarbeitungsmodul (S28) zur Sollschlupf-Reduktion zugeordnete Abbruchkriterium als erfüllt erkannt wird, wenn ein Schaltungsabbruch oder ein Signal "Sollschlupf-Erhöhung" festgestellt wird.

22. Verfahren nach einem der Ansprüche 1 bis 21, dadurch **gekennzeichnet,** daß das Verarbeitungsmodul (S28) zur Sollschlupf-Reduktion beendet wird, wenn erkannt wird, daß der Sollschlupf dn_soll kleiner oder gleich einer Summe aus Ziel-Sollschlupf (dn_soll_ziel) und Schwell-Sollschlupf (dn_soll_schwell) ist.

23. Verfahren nach Anspruch 22, dadurch **gekennzeichnet,** daß der Schwell-Sollschlupf (dn_soll_schwell) konstant ist.

24. Verfahren nach Anspruch 22, dadurch **gekennzeichnet,** daß der Schwellschlupf (dn_schwell) eine Funktion des Motor-Drehmomentes (T_mot) und der Motor-Drehzahl (n_mot) darstellt.

**25.** Verfahren nach einem der Ansprüche 3, 4, 5 oder 13, dadurch **gekennzeichnet,** daß der Wandlerkupplungsdruck (p_WK) als Mittelwert aus einem aktuellen Wert und vorherigen Werten gebildet wird.

**26.** Verfahren nach einem der Ansprüche 1, 9, 10, 13, 18, 19 oder 22, dadurch **gekennzeichnet,** daß der Ziel-Soll-schlupf (dn_soll_ziel) analytisch oder aus einem Kennfeld ermittelt wird.

**27.** Verfahren nach einem der Ansprüche 1 bis 26, dadurch **gekennzeichnet,** daß eine Warteschleife (S2) gestartet wird, wenn in der Unterscheidungsfunktion (S1) festgestellt wird, daß kein Befehl zu einer Getriebeschaltung gegeben ist.

## Claims

**1.** Method for the open-loop control and closed-loop control of a changeover operation in a converter clutch (WK) having a nominal slip, the converter clutch being a closed-loop control system which is downstream of a control unit in a closed-control loop, characterized by the following method steps:

> a) in a first decision function (S1) a test is performed to determine whether a gear-change command is present,
> b) given a positive interrogation result, a test module (S3) is started for testing whether a specified start criterion for a processing module (S4) for nominal slip increase is started and run,
> c) given a positive interrogation result of the test module (S3), the processing module (S4) for nominal slip increase is started and run,
> d) once the processing module (S4) for nominal slip increase has been completed, a check is made in a further test module (S27) to determine whether a specified start criterion for a processing module (S28) for nominal slip reduction to a specified nominal slip (dn_soll) is fulfilled,
> e) given a positive interrogation result of the test module (S27), the processing module (S28) for nominal slip reduction is started and run,
> f) if the processing module (S28) for nominal slip reduction is completed or interrupted, a processing function (S49, S51) is activated for the return to a main program.

**2.** Method according to Claim 1, characterized in that the following method steps are performed in the test module (S3) for testing whether a specified start criterion for the processing module (S4) for nominal slip increase is fulfilled:

> a) in a first decision function (S6), a test is performed to determine whether a predefined delay time prior to the increase in the nominal slip (T_VE), which is started in a processing function (S5), has elapsed,
> b) given a positive interrogation result of the decision function (S6), a processing function (S7) for starting the processing module (S4) for nominal slip increase is activated, but if the delay time (T_VE) has not elapsed, a waiting loop (S8) is started.

**3.** Method according to Claim 1, characterized in that the following method steps are performed in the test module (S3) for testing whether a specified start criterion for a processing module (S4) for nominal slip increase is fulfilled:

> c) in a first decision function (S9), a test is performed to determine whether a "change up to traction mode" signal or a "change back to coasting mode" signal is present,
> d) if the "change up to traction mode" signal or the "change back to coasting mode" signal is detected, a further decision function (S11) is started for testing whether a converter clutch pressure (p_WK) is greater than a first limit value (GW1) and if the interrogation result of the decision function (S9) is negative, a waiting loop (S10) is activated,
> e) if the converter clutch pressure (p_WK) is greater than the limit value (GW1), a processing function (S12) for starting the processing module (S4) for nominal slip increase is activated, but otherwise a waiting loop (S13) is started.

**4.** Method according to Claim 1, characterized in that the following method steps are performed in the test module (S3) for testing whether a specified start criterion for a processing module (S4) for nominal slip increase is fulfilled:

> a) in a first decision function (S15), a test is performed to determine whether a "change up to traction mode" signal or a "change back to coasting mode" signal is present,
> b) if the "change up to traction mode" signal or the "change back to coasting mode" signal is detected, a further decision function (S16) is started for testing whether a converter clutch pressure (p_KW) is greater than a first limit value (GW1),

c) if the converter clutch pressure (p_KW) is greater than the limit value, a processing function (S17) for starting the processing module (S4) for nominal slip increase is activated, otherwise a waiting loop (S18) is started,

d) if the interrogation result of the decision function (S15) for testing whether a "change up to traction mode" signal or a "change back to coasting mode" signal is present is negative, a test is performed in a decision function (S19) to determine whether a predefined delay time for nominal slip increase (T_VE), which is started in a processing function (S14), has elapsed,

e) given a positive interrogation result of the decision function (S19), branching takes place into the processing function (S17) for starting the processing module (S4) for nominal slip increase, but if the delay time (T_VE) has not elapsed, a waiting loop (S20) is started.

5. Method according to Claim 3 or 4, characterized in that the first limit value (GW1) for the converter clutch pressure (p_WK) is a specified threshold pressure (p_WK_schwell).

6. Method according to Claim 5, characterized in that the threshold pressure (p_WK_schwell) is constant.

7. Method according to Claim 5, characterized in that the threshold pressure (p_WK_schwell) is a function of the engine rotational speed (n_Mot).

8. Method according to one of Claims 1 to 7,
characterized in that the following method steps are run in the processing module (S4) for nominal slip increase:

a) in a first processing function (S21), the actual nominal slip value (dn_soll) is read in at a starting time (t_0),

b) in a subsequent processing function (S22), a time loop is started in accordance with the function ($t\_E = t - t\_0$), with (t_E) for the increase time, (t) for actual time and (t_0) for starting time,

c) in a further processing function (S23), the nominal slip (dn_soll) is determined in accordance with a transition function ($dn\_soll = f(t\_E)$),

d) in a decision function (S24), a test is performed to determine whether a termination criterion is fulfilled,

e) if the decision function (S24) detects that a termination criterion is fulfilled, branching is performed into a processing function (S25) for returning to the main program, otherwise branching is performed into a decision function (S26) for testing whether an end condition is fulfilled,

f) if it is found in the decision function (S26) that an end condition is fulfilled, the processing module (S4) for nominal slip increase is terminated, otherwise branching back into the time loop (S22) is performed.

9. Method according to one of Claims 1 to 8,
characterized in that, in the processing module (S4) for nominal slip increase, the nominal slip (dn_soll) is calculated in accordance with the transition function {$dn\_soll(t\_E) = dn\_start + [dn\_soll\_ziel - dn\_start] * (t\_E/T\_E) \, EXP \, (1/P)$} $+ dn\_soll\_basis$}, with t_E for increase time, (T_E) for specified duration of nominal slip increase, (dn_start) for initial nominal slip, (dn_soll_ziel) for specified target nominal slip, (dn_soll_basis) for specified basic nominal slip and (P) for a progression factor.

10. Method according to one of Claims 1 to 8,
characterized in that, in the processing module (S4) for nominal slip increase, the nominal slip (dn_soll) is calculated in accordance with the transition function {$dn\_soll(t\_E) = dn\_start + [dn\_soll\_ziel - dn\_start] * \sin((\pi/2)*(t\_E/T\_E) \, EXP \, P) + dn\_soll\_basis$}, with (t_E) for increase time, (T_E) for specified duration of nominal slip increase, (dn_start) for initial nominal slip, (dn_soll_ziel) for specified target nominal slip, (dn_soll_basis) for specified basic nominal slip and (P) for a progression factor.

11. Method according to one of Claims 1 to 8,
characterized in that, in the processing module (S4) for nominal slip increase, the nominal slip (dn_soll) is calculated in accordance with the transition function {$dn\_soll(t\_E) = dn\_start + dn\_soll\_gradient * t\_E + dn\_soll\_basis$}, with (t_E) for increase time, (dn_start) for initial nominal slip, (dn_soll_gradient) for nominal slip gradient and (dn_soll_basis) for specified basic nominal slip.

12. Method according to one of Claims 8 to 11,
characterized in that the termination criterion associated with the processing module (S4) for nominal slip increase is found to be fulfilled if a gear-change termination or a "nominal slip reduction" signal is detected.

**13.** Method according to one of Claims 8 to 11,
characterized in that the processing module (S4) for nominal slip increase is terminated if it is found that

a) the converter clutch pressure (p_WK) is less than or equal to the threshold pressure (p_WK_schwell) or
b) the specified duration of nominal slip increase (T_E) has elapsed or
c) the nominal slip (dn_soll) is greater than or equal to the target nominal slip (dn_soll_ziel).

**14.** Method according to one of Claims 1 to 13,
characterized in that the following method steps are performed in the test module (S27) for testing whether a specified start criterion for the processing module (S28) for nominal slip reduction is fulfilled:

a) in a first decision function (S29), a test is performed to determine whether a predefined delay time prior to the nominal slip reduction (T_VR), which is started in a processing function (S30), has elapsed,
b) given a positive interrogation result of the decision function (S29), a processing function (S31) for starting the processing module (S28) for nominal slip reduction is activated, and if the delay time (T_VR) has not elapsed, a waiting loop (S32) is started.

**15.** Method according to one of Claims 1 to 13,
characterized in that the following method steps are performed in the test module (S27) for testing whether a specified start criterion for the processing module (S28) for nominal slip reduction is fulfilled:

a) in a first decision function (S33), a test is performed to determine whether the "change up to traction mode" signal or a "change back to coasting mode" signal is present,
b) if the "change up to traction mode" signal or the "change back to coasting mode" signal is detected, a further decision function (S35) is started for testing whether a difference formed from a turbine rotational speed (n_T) and a synchronous rotational speed (n_T_sync) in accordance with the formula ln_T - n_T_syncl is less than or equal to a limit value (GW2), and if the interrogation result of the decision function (S33) is negative, a waiting loop (S34) is activated,
c) if the difference ln_T - n_T_syncl is less than or equal to the limit value (GW2), a processing function (S36) for starting the processing module (S28) for nominal slip reduction is activated, otherwise a waiting loop (S37) is started.

**16.** Method according to one of Claims 1 to 13,
characterized in that the following method steps are performed in the test module (S27) for testing whether a specified start criterion for the processing module (S28) for nominal slip reduction is fulfilled:

a) in a first decision function (S39), a test is performed to determine whether a "change up to traction mode" signal or a "change back to coasting mode" signal is present,
b) if the "change up to traction mode" signal or the "change back to coasting mode" signal is detected, a further decision function (S40) is started for testing whether a difference formed from a turbine rotational speed (n_T) and a synchronous rotational speed (n_T_sync) in accordance with the formula ln_T - n_T_syncl is less than or equal to a limit value (GW2),
c) if the difference ln_T - n_T_syncl is less than or equal to the limit value (GW2), a processing function (S41) for starting the processing module (S28) for nominal slip reduction is activated, otherwise a waiting loop (S42) is started,
d) if the interrogation result of the decision function (S39) for testing whether a "change up to traction mode" signal or a "change back to coasting mode" signal is present is negative, a test is performed in a decision function (S43) to determine whether a predefined delay time prior to the nominal slip reduction (T_VR) which is started in a processing function (S38) has elapsed,
e) given a positive interrogation result of the decision function (S43), branching is performed into the processing function (S41) for starting the processing module (S28) for nominal slip reduction, and if the delay time (T_VR) has not elapsed, a waiting loop (S44) is started.

**17.** Method according to one of Claims 1 to 16,
characterized in that the following method steps are run in the processing module (S28) for nominal slip reduction:

a) in a first processing function (S45), an actual nominal slip value (dn_start) is read in at a starting time (t_0),
b) in a subsequent processing function (S46), a time loop is started in accordance with the function (t_R = t - t_0), with (t_R) for reduction time, (t) for actual time and (t_0) for starting time,

c) in a further processing function (S47), the nominal slip (dn_soll) is determined in accordance with a transition function (dn_soll = f(t_R)),

d) in a decision function (S48), a test is performed to determine whether a termination criterion is fulfilled,

e) if it is found in the decision function (S48) that a termination criterion is fulfilled, branching is performed into a processing function (S49) for returning to the main program, otherwise branching is performed into a decision function (S50) for testing whether an end condition is fulfilled,

f) if it is found in the decision function (S50) that an end condition is fulfilled, the processing module for nominal slip reduction is terminated, otherwise branching back is performed into the time loop (S46).

18. Method according to one of Claims 1 to 17,
characterized in that, in the processing module (S28) for nominal slip reduction, the nominal slip (dn_soll) is determined in accordance with the transition function {dn_soll(t_R) = dn_start - [dn_start - dn_soll_ziel] * (t_R/T_R) EXP (1/P) + dn_soll_basis}, with (t_R) for reduction time, (T_R) for specified duration of the nominal slip reduction, (dn_start) for initial nominal slip, (dn_soll_ziel) for specified target nominal slip, (dn_soll_basis) for specified basic nominal slip and P for a progression factor.

19. Method according to one of Claims 1 to 17,
characterized in that, in the processing module (S28) for nominal slip reduction, the nominal slip (dn_soll) is calculated in accordance with the transition function (dn_soll(t_R) = dn_start - [dn_start - dn_soll_ziel] * sin(($\pi$/2)* (t_R/T_R) EXP P) + dn_soll_basis}, with (t_R) for reduction time, (T_R) for specified duration of the nominal slip reduction, (dn_start) for initial nominal slip, (dn_soll_ziel) for specified target nominal slip, (dn_soll_basis) for specified basic nominal slip and (P) for a progression factor.

20. Method according to one of Claims 1 to 17,
characterized in that, in the processing module (S28) for nominal slip reduction, the nominal slip (dn_soll) is calculated in accordance with the function [dn_soll(t_R) = dn_start - dn_soll_gradient * t_R + dn_soll_basis], with (t_R) for reduction time, (dn_start) for initial nominal slip, (dn_soll_gradient) for nominal slip gradient and (dn_soll_basis) as specified basic nominal slip.

21. Method according to one of Claims 17 to 20,
characterized in that the termination criterion associated with the processing module (S28) for nominal slip reduction is found to be fulfilled if a gear-change termination or a "nominal slip increase" signal is detected.

22. Method according to one of Claims 1 to 21,
characterized in that the processing module (S28) for nominal slip reduction is terminated if it is found that the nominal slip (dn_soll) is less than or equal to a sum formed from target nominal slip (dn_soll_ziel) and threshold nominal slip (dn_soll_schwell).

23. Method according to Claim 22, characterized in that the threshold nominal slip (dn_soll_schwell) is constant.

24. Method according to Claim 22, characterized in that the threshold slip (dn_schwell) is a function of the motor torque (T_Mot) and the motor rotational speed (n_Mot).

25. Method according to one of Claims 3, 4, 5 or 13, characterized in that the converter clutch pressure (p_WK) is formed as the mean value of an actual value and previous values.

26. Method according to one of Claims 1, 9, 10, 13, 18, 19 or 22, characterized in that the target nominal slip (dn_soll_ziel) is determined analytically or from a family of characteristics.

27. Method according to one of Claims 1 to 26,
characterized in that a waiting loop (S2) is started if it is found in the decision function (S1) that no command has been given for a gear change.

**Revendications**

1. Procédé pour la commande et le réglage d'une opération de couplage d'un convertisseur semi-automatique (WK) avec un glissement de consigne, le convertisseur semi-automatique représentant un système réglé, lequel, dans un circuit de réglage comportant une grandeur de référence et une grandeur de réglage, est monté en aval d'un dispositif de réglage,

**caractérisé** par les étapes de procédé suivantes :

a) dans une première fonction de discrimination (S1), il est testé si une instruction pour un changement de vitesse est présent,

b) en cas de réponse positive à l'interrogation, un module de vérification (S3) est lancé pour tester si un critère de démarrage prédéterminé pour un module de traitement (S4) pour l'augmentation du glissement de consigne est satisfait,

c) en cas de réponse positive à l'interrogation du module de vérification (S3), le module de traitement (S4) pour l'augmentation du glissement de consigne est lancé et traité complètement,

d) lorsque le module de traitement (S4) pour l'augmentation du glissement de consigne est terminé, il est testé dans un autre module de vérification (S27) si un critère de démarrage prédéterminé pour un module de traitement (S28) pour la réduction du glissement de consigne à un glissement de consigne prédéterminé (dn_soll) est satisfait,

e) en cas de réponse positive à l'interrogation du module de vérification (S27), le module de traitement (S28) est lancé pour la réduction du glissement de consigne et traité complètement,

f) lorsque le module de traitement (S28) pour la réduction du glissement de consigne est terminé ou a été interrompu, une fonction de traitement (S49, S51) est activée pour le retour dans le programme principal.

2. Procédé selon la revendication 1, **caractérisé** en ce que dans le module de vérification (S3) pour tester si un critère de lancement prédéterminé pour le module de traitement (S4) destiné à l'augmentation du glissement de consigne est satisfait, les étapes de procédé suivantes sont effectuées:

a) dans une première fonction de discrimination (S6), il est testé si un temps de temporisation prédéterminé jusqu'à l'augmentation du glissement de consigne (T_VE), qui est lancé dans une fonction de traitement (S5), est écoulé,

b) en cas de réponse positive à l'interrogation de la fonction de discrimination (S6), une fonction de traitement (S7) pour le lancement du module de traitement (S4) pour l'augmentation du glissement de consigne est activée ; si le temps de temporisation (T_VE) n'est pas expiré, une boucle d'attente (S8) est lancée.

3. Procédé selon la revendication 1, **caractérisé** en ce que dans le module de vérification (S3) pour tester si un critère de lancement prédéterminé pour le module de traitement (S4) destiné à l'augmentation du glissement de consigne est satisfait, les étapes de procédé suivantes sont effectuées :

c) dans une première fonction de discrimination (S9), il est testé si un signal "changement de vitesse vers le haut en traction" ou un signal "changement de vitesse vers le bas en poussée" est présent,

d) si le signal "changement de vitesse vers le haut en traction" ou le signal "changement de vitesse vers le bas en poussée" est détecté, une autre fonction de discrimination (S11) est lancée pour tester si une pression du convertisseur semi-automatique (p_WK) est supérieure à une première valeur limite (GW1); si le résultat de l'interrogation de la fonction de discrimination (S9) est négatif, une boucle d'attente (S10) est activée,

e) si la pression du convertisseur semi-automatique (p_WK) est supérieure à la valeur limite (GW1), une fonction de traitement (S12) pour le lancement du module de traitement (S4) pour l'augmentation du glissement de consigne est démarrée, dans le cas contraire, une boucle d'attente (S13) est activée.

4. Procédé selon la revendication 1, **caractérisé** en ce que, dans le module de vérification (S3) pour tester si un critère de démarrage prédéterminé pour un module de traitement (S4) pour l'augmentation du glissement de consigne est satisfait, les étapes de procédé suivantes sont effectuées:

a) dans une première fonction de discrimination (S15), il est testé si un signal "changement de vitesse vers le haut en traction" ou un signal "changement de vitesse vers le bas en poussée" est présent,

b) si le signal "changement de vitesse vers le haut en traction" ou le signal "changement de vitesse vers le bas en poussée" est détecté, une autre fonction de discrimination (S16) est lancée pour tester si une pression du convertisseur semi-automatique (p_WK) est supérieure à une première valeur limite (GW1),

c) si la pression du convertisseur semi-automatique (p_WK) est supérieure à la valeur limite (GW1), une fonction de traitement (S17) pour le lancement du module de traitement (S4) pour l'augmentation du glissement de consigne est activée, dans le cas contraire, une boucle d'attente (S18) est lancée,

d) si le résultat de l'interrogation de la fonction de discrimination (S15) pour tester la présence d'un signal "changement de vitesse vers le haut en traction" ou d'un signal "changement de vitesse vers le bas en poussée" est négatif, il est testé dans une fonction de discrimination (S19), si un temps de temporisation prédéfini pour l'augmentation du glissement de consigne (T_VE) lancé dans une fonction de traitement (S14) est expiré,

e) en cas de réponse positive à l'interrogation de la fonction de discrimination (S19), la fonction de traitement (S17) pour le lancement du module de traitement (S4) pour l'augmentation du glissement de consigne est embranchée, si le temps de temporisation (T_VE) n'est pas expiré, une boucle d'attente est démarrée.

5. Procédé selon la revendication 3 ou 4, **caractérisé** en ce que la première valeur limite (GW1) pour la pression du convertisseur semi-automatique (p_WK) est une pression de seuil prédéterminée (p_WK_schwell).

6. Procédé selon la revendication 5, **caractérisé** en ce que la pression de seuil (p_WK_schwell) est constante.

7. Procédé selon la revendication 5, **caractérisé** en ce que la pression de seuil (p_WK_schwell) représente une fonction du régime moteur (n_Mot).

8. Procédé selon l'une des revendications 1 à 7, **caractérisé** en ce que, dans le module de traitement (S4) pour l'augmentation du glissement de consigne, les étapes de procédé suivantes sont effectuées :

   a) dans une première fonction de traitement (S21), la valeur effective du glissement de consigne (dn_soll) est entrée à un instant de démarrage (t_0),
   b) dans une fonction de traitement suivante (S22), une boucle de temps est lancée selon la fonction (t_E = t - t_0), avec (t_E) pour le temps d'augmentation, (t) pour le temps effectif et (t_0) pour le temps de démarrage,
   c) dans une autre fonction de traitement (S23), le glissement de consigne (dn_soll) est déterminé selon une fonction de transition (dn_soll = f(t_E)),
   d) dans une fonction de discrimination (S24), il est testé si un critère de rupture est satisfait,
   e) si, dans la fonction de discrimination (S24), il est reconnu qu'un critère de rupture est satisfait, un embranchement dans une fonction de traitement (S25) pour le retour dans le programme principal est effectué, dans le cas contraire, un embranchement dans une fonction de discrimination (S26) pour vérifier si une condition terminale est satisfaite est effectué,
   f) si, dans la fonction de discrimination (S26), il est détecté qu'une condition terminale est satisfaite, le module de traitement (S4) pour l'augmentation du glissement de consigne est terminé, dans le cas contraire, il a lieu un réembranchement dans la boucle de temps (S22) est effectué.

9. Procédé selon l'une des revendications 1 à 8, **caractérisé** en ce que, dans le module de traitement (S4) pour l'augmentation du glissement de consigne, le glissement de consigne (dn_soll) est calculé selon la fonction de transition

$$\{dn\_soll(t\_E) = dn\_start + [dn\_soll\_ziel - dn\_start\,] * (t\_E/T\_E)\ EXP\ (1/P) +$$

$$dn\_soll\_basis\}$$

avec (t_E) pour le temps d'augmentation, (T_E) pour la durée prédéterminée de l'augmentation du glissement de consigne, (dn_start) pour le glissement de consigne au démarrage, (dn_soll_ziel) pour le glissement de consigne recherché prédéterminé, (dn_soll_basis) pour le glissement de consigne de base prédéterminé et (P) pour un facteur de progression.

10. Procédé selon l'une des revendications 1 à 8, **caractérisé** en ce que, dans le module de traitement (S4) pour l'augmentation du glissement de consigne, le glissement de consigne (dn_soll) est calculé selon la fonction de transition

$$\{dn\_soll(t\_E) = dn\_start + [dn\_soll\_ziel - dn\_start\,] * \sin\ (\pi/2) *$$

$$(t\_E/T\_E)\ EXP\ P) + dn\_soll\_basis\}$$

avec (t_E) pour le temps de l'augmentation, (T_E) pour la durée prédéterminée de l'augmentation du glissement

17

de consigne, (dn_start) pour le glissement de consigne du démarrage, (dn_soll_ziel) pour le glissement de consigne recherché de prédéterminé, (dn_soll_basis) pour le glissement de consigne de base prédéterminé et (P) pour un facteur de progression.

11. Procédé selon l'une des revendications 1 à 8, **caractérisé** en ce que, dans le module de traitement (S4) pour l'augmentation du glissement de consigne, le glissement de consigne (dn_soll) est calculé selon la fonction de transition

$$\{dn\_soll(t\_E) = dn\_start + dn\_soll\_gradient * t\_E + dn\_soll\_basis]$$

avec (t_E) pour le temps d'augmentation, (dn_start) pour le glissement de consigne au démarrage, (dn_soll_gradient) pour le gradient du glissement de consigne et (dn_soll_basis) pour le glissement de consigne de base prédéterminé.

12. Procédé selon l'une des revendications 8 à 11, **caractérisé** en ce que, dans le module de traitement (S4) pour l'augmentation du glissement de consigne, le critère d'interruption correspondant est reconnu comme satisfait lorsqu'une interruption de manoeuvre ou un signal "réduction du glissement de consigne" est détecté.

13. Procédé selon l'une des revendications 8 à 11, **caractérisé** en ce que le module de traitement (S4) pour l'augmentation du glissement de consigne est terminé lorsqu'il est détecté que

    a) la pression du convertisseur semi-automatique p_WK est inférieure ou égale à la pression de seuil (p_WK_schwell), ou
    b) la durée prédéterminée de l'augmentation du glissement de consigne (T_E) est expirée, ou
    c) le glissement de consigne (dn_soll) est supérieur ou égal au glissement de consigne recherché (dn_soll_ziel).

14. Procédé selon l'une des revendications 1 à 13, **caractérisé** en ce que, dans le module de vérification (S27) pour tester si un critère prédéterminé de démarrage pour le module de traitement (S28) pour la réduction du glissement de consigne est satisfait, les étapes de procédé suivantes sont effectuées :

    a) dans une première fonction de discrimination (S29) il est testé si un temps de temporisation prédéfini jusqu'à la réduction du glissement de consigne (T_VR) démarrée dans une fonction de traitement (S30) est expiré,
    b) en cas de réponse positive à l'interrogation de la fonction de discrimination (S29), une fonction de traitement (S31) pour le lancement du module de traitement (S28) pour la réduction du glissement de consigne est activée, si le temps de la temporisation (T_VR) n'est pas expiré, une boucle d'attente (S32) est lancée.

15. Procédé selon l'une des revendications 1 à 13, **caractérisé** en ce que dans le module de vérification (S27) pour tester si un critère prédéterminé de démarrage pour le module de traitement (S28) pour la réduction du glissement de consigne est satisfait, les étapes de procédé suivantes sont effectuées :

    a) dans une première fonction de discrimination (S33), il est testé si un signal "changement de vitesse vers le haut en traction" ou un signal "changement de vitesse vers le bas en poussée" est présent,
    b) si le signal "changement de vitesse vers le haut en traction" ou le signal "changement de vitesse vers le bas en poussée" est détecté, une autre fonction de discrimination (S35) est lancée pour tester si une différence calculée à partir de la différence entre une vitesse de rotation de la turbine (n_T) et une vitesse de rotation synchrone (n_T_sync) selon la formule ln_T - n_T_syncl est inférieure ou égale à une valeur limite (GW2) ; si la réponse à l'interrogation de la fonction de discrimination (S33) est négative, une boucle d'attente (S34) est activée,
    c) si la différence ln_T - n_T_syncl est inférieure ou égale à la valeur limite (GW2), une fonction de traitement (S36) pour le lancement du module de traitement (S28) est activée; dans le cas contraire, une boucle d'attente (S37) est lancée.

16. Procédé selon l'une des revendications 1 à 13, **caractérisé** en ce que, dans le module de vérification (S27) pour tester si un critère prédéterminé de démarrage pour le module de traitement (S28) pour la réduction du glissement de consigne est satisfait, les étapes de procédé suivantes sont effectuées :

a) dans une première fonction de discrimination (S39), il est testé si un signal "changement de vitesse vers le haut en traction" ou un signal "changement de vitesse vers le bas en poussée" est présent,

b) si le signal "changement de vitesse vers le haut en traction" ou le signal "changement de vitesse vers le bas en poussée" est détecté, une autre fonction de discrimination (S40) est lancée pour vérifier si une différence calculée à partir de la différence entre une vitesse de rotation de la turbine (n_T) et une vitesse de rotation synchrone (n_T_sync) selon la formule ln_T - n_T_syncl est inférieure ou égale à une valeur limite (GW2),

c) si la différence ln_T - n_T_syncl est inférieure ou égale à une valeur limite (GW2), une fonction de traitement (S41) pour le démarrage du module de traitement (S28) pour la réduction du glissement de consigne est activée, dans le cas contraire, une boucle d'attente (S42) est lancée,

d) si la réponse à l'interrogation de la fonction de discrimination (S39) pour vérifier si un signal "changement de vitesse vers le haut en traction" ou un signal "changement de vitesse vers la poussée" est présent est négative, il est testé, dans une fonction de discrimination (S43), si un temps de temporisation prédéfini jusqu'à la réduction du glissement de consigne (T_VR) qui a été démarré dans une fonction de traitement (S38) est expiré,

e) en cas de réponse positive à l'interrogation de la fonction de discrimination (S43), il a lieu un embranchement dans la fonction de traitement (S41) pour le lancement du module de traitement (S28) pour la réduction du glissement de consigne; au cas ou le temps de temporisation (T_VR) n'est pas expiré, une boucle d'attente (S44) est lancée.

17. Procédé selon l'une des revendications 1 à 16, **caractérisé** en ce que, dans le module de traitement (S28) pour la réduction du glissement de consigne, les étapes de procédé suivantes sont accomplies :

a) dans une première fonction de traitement (S45), une valeur de glissement de consigne effectif (dn_start) est entrée à un instant de lancement (t_0),

b) dans une fonction de traitement suivante (S46), une boucle de temps est lancée selon la fonction (t_R = t - t_0) avec (t_R) pour le temps de réduction, (t) pour le temps effectif et (t_0) pour le temps du lancement,

c) dans une autre fonction de traitement (S47), le glissement de consigne (dn_soll) est déterminé selon une fonction de transition (dn_soll = f(t_R)),

d) dans la fonction de discrimination (S48), il est testé si un critère de rupture est satisfait,

e) si, dans la fonction de discrimination (S48) il est détecté qu'un critère de rupture est satisfait, un embranchement dans une fonction de traitement (S49) pour le retour dans le programme principal est effectué, dans le cas contraire, un embranchement dans une fonction de discrimination (S50) pour tester si une condition terminale satisfaite est effectuée,

f) si, dans la fonction de discrimination (S50), il est détecté qu'une condition terminale est satisfaite, le module de traitement pour la réduction du glissement de consigne est terminé; dans le cas contraire, un réembranchement dans la boucle du temps (S46) est effectué.

18. Procédé selon l'une des revendications 1 à 17, **caractérisé** en ce que, dans le module de traitement (S28) pour la réduction du glissement de consigne, le glissement de consigne (dn_soll) est déterminé selon la fonction de transition

$$\{dn\_soll(t\_R) = dn\_start - [dn\_start - dn\_soll\_ziel] * (t\_R/T\_R)\ EXP\ (1/P) +$$

$$dn\_soll\_basis\}$$

avec (t_R) pour le temps de la réduction, (T_R) pour la durée prédéterminée de la réduction du glissement de consigne, (dn_start) pour le glissement de consigne au démarrage, (dn_soll_ziel) pour le glissement de consigne recherché prédéterminé, (dn_soll_basis) pour le glissement de consigne de base prédéterminé et P pour un facteur de progression.

19. Procédé selon l'une des revendications 1 à 17, **caractérisé** en ce que dans le module de traitement (S28) pour la réduction du glissement de consigne, le glissement de consigne (dn_soll) est calculé selon la fonction de transition

$$\{dn\_soll(t\_R) = dn\_start - [dn\_start - dn\_soll\_ziel] * sin\ ((\pi/2) * (t\_R/ T\_R)\ EXP$$

P) + dn_soll_basis}

avec (t_R) pour le temps de réduction, (T_R) pour la durée prédéterminée de la réduction du glissement de consigne, (dn_start) pour le glissement de consigne au démarrage, (dn_soll_ziel) pour le glissement de consigne recherché prédéterminé, (dn_soll_basis) pour le glissement de consigne de base prédéterminé et (P) pour un facteur de progression.

20. Procédé selon l'une des revendications 1 à 17, **caractérisé** en ce que, dans le module de traitement (S28) pour la réduction du glissement de consigne, le glissement de consigne (dn_soll) est calculé selon la fonction

$$[dn\_soll(t\_R) = dn\_start - dn\_soll\_gradient * t\_R + dn\_soll\_basis]$$

avec t_R pour le temps de réduction, dn_start pour le glissement de consigne au démarrage, dn_soll_gradient pour le gradient du glissement de consigne et dn_soll_basis comme glissement de consigne de base prédéterminé.

21. Procédé selon l'une des revendications 17 à 20, **caractérisé** en ce que le critère de rupture affecté au module de traitement (S28) pour la réduction du glissement de consigne est reconnu comme satisfait lorsqu'une interruption de manoeuvre ou un signal "augmentation du glissement de consigne" est détecté.

22. Procédé selon l'une des revendications 1 à 21, **caractérisé** en ce que le module de traitement (S28) pour la réduction du glissement de consigne est terminé lorsqu'il est détecté que le glissement de consigne dn_soll est inférieur ou égal à une somme composée du glissement de consigne recherché (dn_soll_ziel) et du glissement de consigne de seuil (dn_soll_schwell).

23. Procédé selon la revendication 22, **caractérisé** en ce que le glissement de consigne de seuil (dn_soll_schwell) est constant.

24. Procédé selon la revendication 22, **caractérisé** en ce que le glissement de seuil (dn_schwell) représente une fonction du couple moteur (T_mot) et du régime moteur (n_mot).

25. Procédé selon l'une des revendications 3, 4, 5 ou 13, **caractérisé** en ce que la pression du convertisseur semi-automatique (p_WK) est formée comme une moyenne entre une valeur effective et une valeur précédente.

26. Procédé selon l'une des revendications 1, 9, 10, 13, 18, 19 ou 22, **caractérisé** en ce que le glissement de consigne recherché (dn_soll_ziel) est déterminé par analyse ou à partir d'un champ caractéristique.

27. Procédé selon l'une des revendications 1 à 26, **caractérisé** en ce qu'une boucle d'attente (S2) est lancée lorsqu'il est détecté, dans la fonction de discrimination (S1), qu'aucune commande pour un changement de vitesse n'a été donnée.

S1 Getriebe-schaltung — nein → warten (S2)

ja ↓

S3 Start-kriterium für Sollschlupf-Erhöhung erfüllt — nein → warten

ja ↓

S4 Sollschlupf-Erhöhung

↓

S27 Start-kriterium für Sollschlupf-Reduktion erfüllt — nein → warten

ja ↓

S28 Sollschlupf-Reduktion

↓

S51 Rückkehr in das Hauptprogramm

Fig. 1

S5

Start T_VE

S6

T_VE
abgelaufen

nein → warten

S8

ja

S7

Sollschlupf-Erhöhung
starten

Fig. 2

S9

Hochschaltung in Zugbetrieb
ODER
Rückschaltung in Schubbetrieb

nein → warten

S10

ja

S11

p_WK>GW1

nein → warten

S13

S12

Sollschlupf-Erhöhung
starten

Fig. 3

S14 — Start T_VE

S15 — Hochschaltung in Zugbetrieb ODER Rückschaltung in Schubbetrieb

nein

ja

S16 — p_WK>GW1

nein → S18 — warten

ja

S19 — T_VE abgelaufen

nein → S20 — warten

ja

S17 — Sollschlupf-Erhöhung starten

Fig. 4

S30 — Start T_VR

S29 — T_VR abgelaufen

nein → S32 — warten

ja

S31 — Sollschlupf-Reduktion starten

Fig. 6

START

S21

dn_start = dn_soll(t)
t_0 = t

S22

$\triangle$ t_E = t-t_0

S23

dn_soll = f(t_E)

S25

S24

Rückkehr in das
Hauptprogramm

ja

Abbruchkriterium
erfüllt

nein

S26

Endebedingung
erfüllt

nein

ja

ENDE

Fig. 5

S33

Hochschaltung in Zugbetrieb
ODER
Rückschaltung in Schubbetrieb

nein

S34

warten

ja

S35

$|n\_T-n\_T\_sync| \leqslant GW2$

nein

S37

warten

ja

S36

Sollschlupf-Reduktion
starten

Fig. 7

S38   Start T_VR

S39

Hochschaltung in Zugbetrieb
ODER
Rückschaltung in Schubbetrieb

nein

ja

S40

$|n\_T-n\_T\_sync| \leqslant GW2$

nein

S42

warten

S43

T_VR
abgelaufen

nein

S44

warten

ja

ja

S41

Sollschlupf-Reduktion
starten

Fig. 8

START

S45 — dn_start = dn_soll(t)
t_0 = t

S46 — $\triangle t\_R = t - t\_0$

S47 — dn_soll = f(t_R)

S48 — Abbruch-kriterium erfüllt

S49 — Rückkehr in das Hauptprogramm ← ja

nein

S50 — Ende-bedingung erfüllt — nein

ja

ENDE

<u>Fig. 9</u>

26

dn_soll[1/min]

Fig. 10

dn_soll[1/min]

Fig. 11